# EUROPÄISCHE PATENTSCHRIFT

(11) **EP 1 196 475 B1**
(45) Veröffentlichungstag und Bekanntmachung des Hinweises auf die Patenterteilung: **20.07.2005**
(21) Anmeldenummer: 00943994.4
(22) Anmeldetag: 05.07.2000
(51) Int. Cl.: C08G 67/02

(54) **VERFAHREN ZUR HERSTELLUNG VON OLEFIN/KOHLENMONOXID-COPOLYMEREN**
METHOD FOR THE PRODUCTION OF OLEFIN/CARBON MONOXIDE COPOLYMERS
PROCEDE DE PRODUCTION DE COPOLYMERES OLEFINE/MONOXYDE DE CARBONE

(30) Priorität: 21.07.1999 DE 19933383
(43) Veröffentlichungstag der Anmeldung: 17.04.2002
(73) Patentinhaber: BASF AKTIENGESELLSCHAFT, 67056 Ludwigshafen (DE)
(72) Erfinder: QUEISSER, Joachim, D-68165 Mannheim (DE); GEPRÄGS, Michael, D-67245 Lambsheim (DE); RIEGER, Bernhard, D-89075 Ulm (DE); HUHN, Wolfgang, D-89075 Ulm (DE)
(86) Internationale Anmeldenummer: PCT/EP2000/006298
(87) Internationale Veröffentlichungsnummer: WO 2001/007503

(56) Entgegenhaltungen:
- EP-A- 0 429 105
- EP-A- 0 619 334
- WO-A-00/20487
- WO-A-97/34943
- ABU-SURRAH A S ET AL: "ULTRAHIGH MOLECULAR WEIGHT ALTERNATING PROPENE/ETHENE/CARBON MONOXIDE TERPOLYMERS WITH ELASTIC PROPERTIES" MACROMOLECULAR: RAPID COMMUNICATIONS,DE,WILEY VCH, WEINHEIM, Bd. 17, Nr. 8, 1. August 1996 (1996-08-01), Seiten 559-565, XP000634647 ISSN: 1022-1336
- ABU-SURRAH A S ET AL: "POLYKETONE MATERIALS: CONTROL OF GLASS TRANSITION TEMPERATURE AND SURFACE POLARITY BY CO- AND TERPOLYMERIZATION OF CARBON MONOXIDE WITH HIGHER 1-OLEFINS" MACROMOLECULAR CHEMISTRY AND PHYSICS,DE,WILEY VCH, WEINHEIM, Bd. 198, Nr. 4, 1. April 1997 (1997-04-01), Seiten 1197-1208, XP000677496 ISSN: 1022-1352 in der Anmeldung erwähnt

## Beschreibung

Die vorliegende Erfindung betrifft ein Verfahren zur Herstellung von linearen, alternierenden Kohlenmonoxid-Copolymeren, bei dem mindestens eine olefinisch ungesättigte Verbindung mit zwei bis zwanzig Kohlenstoffatomen (Komponente K1) und Kohlenmonoxid copolymerisiert werden.

Lineare, alternierende Copolymere aus Kohlenmonoxid und olefinisch ungesättigten Verbindungen, auch kurz als Kohlenmonoxidcopolymere oder Polyketone bezeichnet, sind bekannt. Beispielsweise zeichnen sich hochmolekulare teilkristalline Polyketone mit streng alternierender Abfolge der Monomeren in der Hauptkette im allgemeinen durch hohe Schmelzpunkte, gute Wärmeformbeständigkeit, gute Chemikalienbeständigkeit, gute Barriereeigenschaften gegenüber Wasser und Luft sowie vorteilhaften mechanischen und rheologischen Eigenschaften aus.

Von besonderem technischen Interesse sind Polyketone aus Kohlenmonoxid und zwei Olefinen, im allgemeinen α-Olefinen, wie zum Beispiel Kohlenmonoxid-Ethen-Propen-, Kohlenmonoxid-Ethen-Buten-1-, Kohlenmonoxid-Ethen-Hexen-1-, Kohlenmonoxid-Propen-Buten-1- oder Kohlenmonoxid-Propen-Hexen-1-Copolymere.

Übergangsmetallkatalysierte Verfahren zur Herstellung von Polyketonen sind bekannt. Beispielsweise wird in der EP-A 0 121 965 ein mit bidentaten Phosphinliganden chelatisierter cis-Palladiumkomplex, [Pd(Ph₂P(CH₂)₃PPh₂)](OAc)₂ (Ph = Phenyl, Ac = Acetyl), eingesetzt. Die Kohlenmonoxidcopolymerisation kann in Suspension, wie in der EP-A 0 305 011 beschrieben, oder in der Gasphase, beispielsweise gemäß EP-A 0 702 045, durchgeführt werden. Häufig eingesetzte Suspensionsmittel sind zum einen niedermolekulare Alkohole, insbesondere Methanol (s.a. EP-A 0 428 228), zum anderen unpolare oder polare aprotische Flüssigkeiten wie Dichlormethan, Toluol oder Tetrahydrofuran (vgl. EP-A 0 460 743 und EP-A 0 590 942). Auch Wasser als Reaktionsmedium ist bekannt (siehe Jiang und Sen, Macromolecules, 1994, 27, S. 7215-7216, und Verspui et al., Chem. Commun., 1998, S. 401-402). Bei den Verfahren zur Herstellung von Polyketonen, die in wäßrigem Medium durchgeführt werden, können neben wasserlöslichen Katalysatoren auch Lösungsvermittler oder als Aktivator wirkende Hydroxyverbindungen eingesetzt werden.

Als gut geeignet für die genannten Polymerisationsverfahren haben sich insbesondere Komplexverbindungen mit Bisphosphinchelatliganden erwiesen, deren Reste am Phosphor Aryl- oder substituierte Arylgruppen darstellen. Besonders häufig werden demgemäß als Chelatliganden 1,3-Bis(diphenylphosphino)propan oder 1,3-Bis[di-(o-methoxyphenyl)phosphino)]propan eingesetzt (s.a. Drent et al., Chem. Rev., 1996, 96, S. 663 - 681). Üblicherweise wird die Kohlenmonoxidcopolymerisation in den genannten Fällen in Gegenwart von Säuren durchgeführt.

Den genannten Verfahren ist gemeinsam, daß die Einsatzstoffe, Kohlenmonoxid und Olefine, entweder vor Beginn der Polymerisation in gesamter Menge vorgelegt oder einzelne oder alle Einsatzstoffe während der Polymerisation kontinuierlich zudosiert werden.

Bei der kontinuierlichen Verfahrensführung werden ein oder mehrere Edukte während der gesamten Dauer der Polymerisation zudosiert. Man erhält Copolymere, die hauptsächlich aus Einheiten bestehen, die aus Kohlenmonoxid und dem schnellstreagierenden Olefin aufgebaut sind, und in wesentlich geringerem Anteil Einheiten enthalten, die aus Kohlenmonoxid und langsamer reagierenden Olefinen aufgebaut wurden. Die unterschiedlichen Kohlenmonoxid-Olefin-Einheiten liegen statistisch verteilt im Polymer vor (Drent et al., Chem. Rev., 1996, 96, S. 663 - 681, Rieger et al., Macromol. Chem. Phys. 1997, 198, S. 1197-1208 und Barsacchi et al., Macromolecules, 1992, 25, S. 3604-3606).

Werden vor der Polymerisation alle Edukte in gesamter Menge vorgelegt (diskontinuierliches Verfahren), so erhält man Copolymere, deren Moleküle anfangs praktisch ausschließlich aus Einheiten aufgebaut sind, die aus Kohlenmonoxid und dem am schnellsten reagierenden Olefin, d.h. in der Regel dem Olefin mit der geringsten Kohlenstoffatomanzahl, gebildet werden. Erst nach Verbrauch des schnellstreagierenden Olefins werden in das Makromolekül auch Einheiten in nennenswertem Maß eingebaut, die aus Kohlenmonoxid und anderen Olefinen bestehen. Nach solchen Verfahren sind also z.B. für zwei Olefine mit stark unterschiedlichen Reaktivitäten lediglich Blockcopolymere erhältlich, deren Makromoleküle aus genau zwei unterschiedlichen Blöcken bestehen (siehe beispielsweise EP-A-429 105).

Sowohl der kontinuierlichen als auch der diskontinuierlichen Verfahrensführung ist gemein, daß nur relativ geringe Einbauraten langsamer reagierender Olefine erzielbar sind. So erhaltene Polyketone besitzen dementsprechend nur geringfügig verbesserte Eigenschaften im Vergleich zu lediglich aus Kohlenmonoxid und einem Olefin aufgebauten Polyketonen.

Im Unterschied zu den genannten (dis-)kontinuierlichen Verfahren zur Polyketonherstellung offenbart EP-A-619 334 ein Verfahren, mit dem zwar hohe Einbauraten unterschiedlicher Olefine in ein Terpolymer erreichbar sind, allerdings ist dieses Verfahren kompliziert und die Ausbeuten sind gering. Die erhältlichen Polymere bestehen aus Makromolekülen, die ebenfalls nur aus maximal zwei voneinander verschiedenen Blöcken aufgebaut sind.

Der vorliegenden Erfindung lag deshalb die Aufgabe zugrunde, Verfahren zur Herstellung von Polyketonen zur Verfügung zu stellen, welche geeignet sind, bei hohen Katalysatoraktivitäten und damit verbundenen Produktivitäten sowohl für schnell als auch langsam reagierende Olefine hohe Einbauraten zu gewährleisten.

Weiterhin sollten Polyketone gefunden werden, die hohe Molekulargewichte aufweisen und neben Kohlenmonoxid hohe Anteile unterschiedlicher Olefine enthalten. Diese Polyketone sollen gegenüber bekannten Kohlenmonoxidcopolymeren verbesserte Eigenschaften bezüglich ihres thermischen und mechanischen Verhaltens aufweisen. Insbesondere sollen die Polyketone eine hohe Elastizität aufweisen.

Demgemäß wurde ein Verfahren zur Herstellung von linearen, alternierenden Kohlenmonoxid-Copolymeren, bei dem mindestens eine olefinisch ungesättigte Verbindung mit zwei bis zwanzig Kohlenstoffatomen (Komponente K1) und Kohlenmonoxid in Gegenwart von
a) Metallkomplexen der allgemeinen Formel (I) 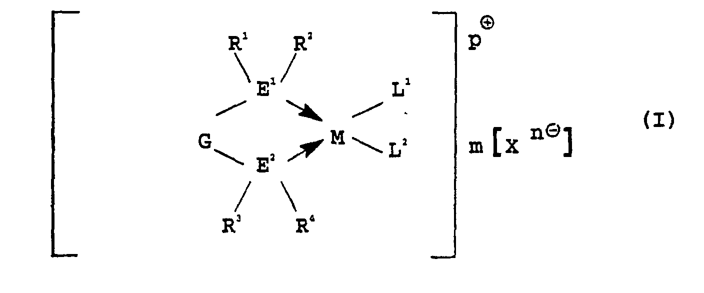 in der die Substituenten und Indizes die folgende Bedeutung haben:
   - G: 5-, 6- oder 7-atomiges carbocyclisches Ringsystem ohne oder mit einem oder mehreren Heteroatomen, -(CR^{b} ₂)ᵣ-, -(CR^{b} ₂)ₛ-Si(R^{a})₂-(CR^{b} ₂)ₜ-, -A-O-B- oder -A-Z(R⁵)-B- mit
   - R⁵: Wasserstoff, C₁- bis C₂₈-Alkyl, C₃- bis C₁₄-Cycloalkyl, C₆- bis C₁₅-Aryl oder Alkylaryl mit 1 bis 20 C-Atomen im Alkylrest und 6 bis 15 C-Atomen im Arylrest, -N(R^{b})₂ oder -Si(R^{a})₃, wobei die genannten Reste auch substituiert sein können,
   - A, B: -(CR^{b} ₂)ᵣ,-, -(CR^{b} ₂)ₛ-Si(R^{a})₂-(CR^{b} ₂)ₜ-, -N(R^{b})-, ein r'-, s- oder t-atomiger Bestandteil eines Ringsystems oder zusammen mit Z ein (r'+1)-, (s+1)- oder (t+1)-atomiger Bestandteil eines Heterocyclus,
   - R^{a}: unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil, wobei die genannten Reste auch substituiert sein können,
   - R^{b}: wie R^{a}, zusätzlich Wasserstoff oder Si(R^{a})₃,
   - r: 1, 2, 3 oder 4 und
   - r': 1 oder 2,
   - s, t: 0, 1 oder 2, wobei 1 ≤ s+t ≤ 3,
   - Z: ein nichtmetallisches Element aus der Gruppe 15 des Periodensystems der Elemente,
   - M: ein Metall, ausgewählt aus den Gruppen 8 bis 12 des Periodensystems der Elemente,
   - E¹, E²: ein nichtmetallisches Element aus der Gruppe 15 des Periodensystems der Elemente,
   - R¹ bis R⁴: lineares oder verzweigtes C₁- bis C₂₈-Alkyl, C₃- bis C₁₄-Cycloalkyl, C₆-C₁₅-Aryl oder Alkylaryl mit 1 bis 28 C-Atomen im Alkylteil und 6 bis 15 C-Atomen im Arylteil, wobei die genannten Reste auch substituiert sein können,
   - L¹, L²: formal geladene oder neutrale Liganden,
   - X: formal ein- oder mehrwertige Anionen,
   - p: 0, 1, 2 oder 3,
   - m, n: 0, 1, 2 oder 3
   - wobei: p = m x n,
b) gegebenenfalls einer Protonen- oder Lewissäure und
c) gegebenenfalls einer Hydroxyverbindung
copolymerisiert werden, gefunden, welches dadurch gekennzeichnet ist, daß zu der laufenden Copolymerisation mindestens eine olefinisch ungesättigte Verbindung mit zwei bis zwanzig Kohlenstoffatomen (Komponente K2, ≠ Komponente K1) pulsweise, d.h. in Form einer regelmäßigen oder unregelmäßigen Abfolge von Zugabe, genannt Puls, und Nicht-Zugabe, zudosiert wird, wobei die Anzahl der Pulse mindestens zwei ist.

Erfindungsgemäß wird also eine olefinisch ungesättigte Verbindungen enthaltende Komponente K2 pulsweise zu einer laufenden Polymerisation von Kohlenmonoxid und einer olefinisch ungesättigte Verbindungen enthaltenden Komponente K1 zudosiert.

In dem erfindungsgemäßen Verfahren wird zu der wie beschrieben laufenden Copolymerisation von Kohlenmonoxid und Komponente K1 pulsweise Komponente K2 zudosiert, indem sie durch einen im Vergleich zum Reaktionsgefäß erhöhten Druck in das Reaktionsmedium eingebracht wird, beispielsweise durch Eindüsen oder Einspritzen.

Der Begriff "pulsweise" ist dabei so zu verstehen, daß die Dosierung von K2 in Form einer regelmäßigen oder unregelmäßigen Abfolge von Zugabe, genannt Puls, und Nicht-Zugabe erfolgt und daß die Dauer einer Zugabe, d.h. die Dauer eines "Pulses", kurz ist im Vergleich zu der Zeit, die zwischen zwei Pulsen, d.h. ohne Zugabe von K2, liegt.

Die Pulsdauer liegt im Bereich von 0,1 s bis 5 min, vorzugsweise 0,1 s bis 1 min, besonders bevorzugt 0,1 bis 10 s und insbesondere 0,1 bis 1 s. Die einzelnen Pulse können, müssen aber nicht gleich lang sein.

Die Zeit zwischen zwei Pulsen beträgt üblicherweise 1 min bis 2h, bevorzugt 2 bis 60 min, besonders bevorzugt 5 bis 45 min. Die einzelnen Zeiten zwischen zwei Pulsen können, müssen aber nicht identisch sein.

Das Verhältnis der Zeit zwischen zwei Pulsen und der Pulsdauer liegt üblicherweise im Bereich von 2 bis 100 000, bevorzugt 500 bis 100 000, insbesondere 1 000 bis 10 000.

Die untere Grenze der Anzahl der Pulse liegt bei 2. Eine Begrenzung der Anzahl der Pulse nach oben existiert prinzipiell nicht, ist aber praktisch durch die Gesamtdauer der Copolymerisation gegeben, die beispielsweise im Fall der diskontinuierlichen Copolymerisation von Kohlenmonoxid und Komponente K1 im Bereich von 1 bis 72 Stunden, bevorzugt 2 bis 24 Stunden, besonders bevorzugt 3 bis 12 Stunden liegt.

Die während eines Pulses zugeführte Menge der Komponente K2 im Vergleich zur insgesamt eingesetzten Menge K1 (jeweils bezogen auf mol Olefin) beträgt vorteilhaft 0,01 bis 30, bevorzugt 0,1 bis 10 und besonders bevorzugt 0,2 bis 5 %.

Bei einem bevorzugten erfindungsgemäßen Verfahren enthält mindestens eine olefinisch ungesättigte Verbindung der Komponente K2 weniger oder gleich viele Kohlenstoffatome wie die olefinisch ungesättigte Verbindung mit der geringsten Kohlenstoffatomanzahl der Komponente K1.

Bei einer besonders bevorzugten Ausführungsform des erfindungsgemäßen Verfahrens weist mindestens eine olefinisch ungesättigte Verbindung der Komponente K2 eine mindestens gleich große oder höhere Reaktivität auf wie die olefinisch ungesättigte Verbindung mit der höchsten Reaktivität der Komponente K1.

Ganz besonders bevorzugt ist ein erfindungsgemäßes Verfahren, bei dem K1 Propen und K2 Ethen ist.

Weiterhin wurden neue Polyketone gefunden, die nach dem erfindungsgemäßen Verfahren erhältlich sind.

Die erfindungsgemäßen Polyketone zeichnen sich dadurch aus, daß die ihnen zugrunde liegenden Makromoleküle aus voneinander verschiedenen Kettensegmenten aufgebaut sind, wobei innerhalb jedes einzelnen Kettensegments eine statistische Verteilung von aus Kohlenmonoxid und K1 und aus Kohlenmonoxid und K2 aufgebauten Einheiten vorliegt und wobei für je zwei aufeinanderfolgende Kettensegmente im allgemeinen gilt: V≠1, wobei V definiert ist als:
[(Anzahl aus Kohlenmonoxid und K1 aufgebauter Einheiten in einem gegebenen Kettensegment) / (Anzahl aus Kohlenmonoxid und K2 aufgebauter Einheiten in einem gegebenen Kettensegment)] /
   [(Anzahl aus Kohlenmonoxid und K1 aufgebauter Einheiten im anschließenden Kettensegment) / (Anzahl aus Kohlenmonoxid und K2 aufgebauter Einheiten im anschließenden Kettensegment)]

Weiterhin wurde die Verwendung der erfindungsgemäßen Kohlenmonoxid-Copolymere für die Herstellung von Fasern, Folien oder Formkörpern gefunden.

Außerdem wurden Fasern, Folien oder Formkörper im wesentlichen enthaltend erfindungsgemäße Kohlenmonoxid-Copolymere gefunden.

Für die als Komponente K1 bezeichneten olefinisch ungesättigten Monomerverbindungen kommen bei den genannten Verfahren zur Herstellung der Kohlenmonoxidcopolymeren grundsätzlich sowohl reine Kohlenwasserstoffverbindungen als auch heteroatomhaltige α-Olefine, wie (Meth)acrylsäureester oder -amide sowie Homoallyl- oder Allylalkohole, -ether oder -halogenide in Betracht. Unter den reinen Kohlenwasserstoffen sind C₂- bis C₂₀-1-Alkene geeignet. Unter diesen sind die niedermolekularen α-Olefine, z.B. α-Olefine mit 2 bis 8 C-Atomen wie Ethen, Propen, 1-Buten, 1-Penten, 1-Hexen oder 1-Octen hervorzuheben. Selbstverständlich können auch cyclische Olefine, z.B. Cyclopenten, Norbornen, aromatische Olefinverbindungen wie Styrol oder α-Methylstyrol oder Vinylester wie Vinylacetat eingesetzt werden. Besonders bevorzugt wird Propen. Es können auch Mischungen der genannten Stoffe eingesetzt werden. Besonders bevorzugt werden Mischungen von Ethen mit niedermolekularen α-Olefinen, wie Propen, 1-Buten, 1-Hexen, 1-Octen oder 1-Decen verwendet. Ganz besonders bevorzugt sind Mischungen aus Ethen und Propen.

Als olefinisch ungesättigte Monomerverbindungen der Komponente K2 kommen prinzipiell die für Komponente K1 genannten Stoffe in Betracht, mit der Maßgabe, daß sich K1 und K2 in mindestens einer Verbindung voneinander unterscheiden. Bevorzugt sind niedermolekulare α-Olefine, z.B. α-Olefine mit 2 bis 8 C-Atomen wie Ethen, Propen, 1-Buten, 1-Penten, 1-Hexen oder 1-Octen, insbesondere Ethen.

Bevorzugt werden die olefinisch ungesättigten Verbindungen der Komponente K2 so gewählt, daß mindestens eine von ihnen in dem erfindungsgemäßen Verfahren eine größere oder zumindest gleich große Reaktivität aufweist wie die olefinisch ungesättigte Verbindung der Komponente K1 mit der größten Reaktivität. Üblicherweise nimmt die Reaktionsgeschwindigkeit im erfindungsgemäßen Verfahren mit zunehmender Anzahl der Kohlenstoffatome der olefinisch ungesättigten Verbindungen ab. Bevorzugt werden also die Komponenten K1 und K2 so gewählt, daß mindestens eine olefinisch ungesättigte Verbindung der Komponente K2 weniger oder gleich viele Kohlenstoffatome enthält wie die olefinisch ungesättigte Verbindung mit der geringsten Kohlenstoffatomanzahl der Komponente K1. In besonders bevorzugten Ausführungsformen der Erfindung ist K1 ein Gemisch aus Propen und Ethen, K2 ist Ethen. Ganz besonders bevorzugt ist K1 Propen und K2 Ethen.

Die verbrückende Struktureinheit G in den Metallkomplexen a) des erfindungsgemäßen Verfahrens besteht im allgemeinen aus ein- oder mehratomigen Brückensegmenten. Unter einer verbrückenden Struktureinheit wird grundsätzlich eine Gruppierung verstanden, die die Elemente E¹ und E² miteinander verbindet. Unter solche Struktureinheiten fallen beispielsweise 5-, 6- oder 7-atomige carbocyclische Ringsysteme ohne oder mit einem oder mehreren Heteroatomen. Die Ringsysteme können aliphatisch oder aromatisch sein. Bevorzugt sind 5- oder 6-atomige Ringsysteme mit 0, 1 oder 2 Heteroatomen, ausgewählt aus N, O oder S.

Die Bindungen zu den Atomen E¹ und E² können relativ zueinander jede beliebige Position einnehmen. Bevorzugte relative Positionen zueinander sind die 1,2-, die 1,3- und die 1,4-Positionen.

Bevorzugte Ausführungsformen für cyclische Struktureinheiten G sind die folgenden (Bindungsstellen zu E¹ bzw. E² sind gekennzeichnet):

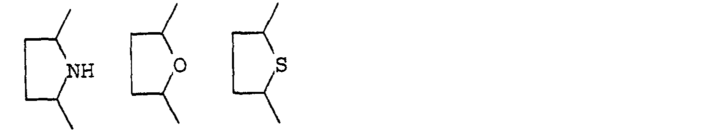

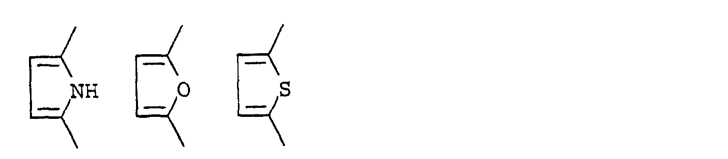

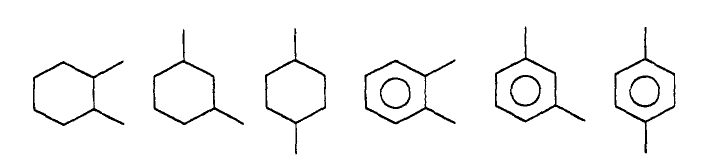

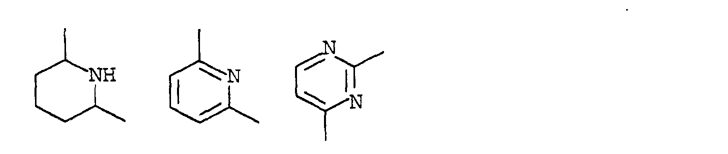

Die verbrückende Struktureinheit G kann weiterhin eine substituierte oder unsubstituierte Alkylenkette sein, oder auch eine Alkylenkette, in der eine Alkyleneinheit durch eine Silylengruppe, eine Amino- oder Phosphinogruppe oder durch einen Ethersauerstoff ersetzt ist.

Unter den einatomig verbrückten Struktureinheiten sind solche mit einem verbrückenden Atom aus der Gruppe 14 des Periodensystems der Elemente wie -C(R^{b})₂- oder -Si(R^{a})₂-, worin R^{a} unabhängig voneinander insbesondere für lineares oder verzweigtes C₁- bis C₁₀-Alkyl, beispielsweise Methyl, Ethyl, i-Propyl oder t-Butyl, C₃- bis C₆-Cycloalkyl, wie Cyclopropyl oder Cyclohexyl, C₆- bis C₁₀-Aryl, wie Phenyl oder Naphthyl, mit funktionellen Gruppen, welche nichtmetallische Elemente der Gruppen 14, 15, 16 oder 17 des Periodensystems der Elemente enthalten, substituiertes C₆- bis C₁₀-Aryl, beispielsweise Tolyl, (Trifluormethyl)phenyl, Dimethylaminophenyl, p-Methoxyphenyl oder partiell oder perhalogeniertes Phenyl, Aralkyl mit 1 bis 6 C-Atomen im Alkylteil und 6 bis 10 C-Atomen im Arylteil, beispielsweise Benzyl, und R^{b} insbesondere für Wasserstoff, Si(R^{a})₃ und daneben für die vorstehend für R^{a} angegebenen Bedeutungen stehen, bevorzugt. R^{a} stellt insbesondere eine Methylgruppe, R^{b} insbesondere Wasserstoff dar.

Unter den mehratomig verbrückten Systemen sind die zwei-, drei- und vieratomig verbrückten Struktureinheiten hervorzuheben, wobei die dreiatomig verbrückten Systeme in der Regel bevorzugt eingesetzt werden.

Geeignete dreiatomig verbrückte Struktureinheiten basieren im allgemeinen auf einer Kette aus Kohlenstoffatomen, also zum Beispiel Propen (-CH₂CH₂CH₂-), oder auf einer Brückeneinheit mit einem Heteroatom aus der Gruppe 14, 15 oder 16 des Periodensystems der Elemente, wie Silicium, Stickstoff, Phosphor oder Sauerstoff im Kettengerüst.

Die Brückenkohlenstoffatome können im allgemeinen mit C₁- bis C₆-Alkyl wie Methyl, Ethyl oder t-Butyl, C₆- bis C₁₀-Aryl wie Phenyl oder durch funktionelle Gruppen, welche Elemente der Gruppen 14, 15, 16 oder 17 des Periodensystems der Elemente enthalten, also beispielsweise Triorganosilyl, Dialkylamino, Alkoxy, Hydroxy oder Halogen substituiert sein. Geeignete substituierte Propylenbrücken sind zum Beispiel solche mit einer Methyl-, Phenyl-, Hydroxy-, Trifluormethyl-, ω-Hydroxyalkyl- oder Methoxygruppe in 2-Position.

Unter den mehratomig verbrückten Struktureinheiten mit einem Heteroatom im Kettengerüst werden vorteilhaft Verbindungen eingesetzt, in denen Z Stickstoff oder Phosphor, insbesondere Stickstoff bedeutet (s.a. Formel (I)). Der Substituent R⁵ an Z kann insbesondere bedeuten: Wasserstoff, lineares oder verzweigtes C₁-bis C₂₈-Alkyl, insbesondere C₁- bis C₂₀-Alkyl wie Methyl, Ethyl, i-Propyl, t-Butyl, n-Hexyl oder n-Dodecyl, C₃- bis C₁₄-Cycloalkyl, insbesondere C₃ bis C₈-Cycloalkyl wie Cyclopropyl oder Cyclohexyl, C₆- bis C₁₅-Aryl, insbesondere C₆- bis C₁₀-Aryl, beispielsweise Phenyl, oder Alkylaryl mit 1 bis 20 C-Atomen im Alkylrest und 6 bis 10 C-Atomen im Arylrest, beispielsweise Benzyl.

Die genannten Alkyl- und Arylreste können unsubstituiert oder substituiert sein. Als Substituenten kommen zum Beispiel funktionelle Gruppen, welche Atome der Gruppen 14, 15, 16 oder 17 des Periodensystems der Elemente enthalten, in Betracht. Geeignet sind u.a. Triorganosilylgruppen wie Trimethylsilyl oder t-Butyldiphenylsilyl, die Carbonsäuregruppe oder Carbonsäurederivate wie Ester oder Amide, primäre, sekundäre oder tertiäre Aminogruppen wie Dimethylamino oder Methylphenylamino, die Nitro- und die Hydroxygruppe, des weiteren Alkoxyreste wie Methoxy oder Ethoxy, die Sulfonatgruppe sowie Halogenidatome wie Fluor, Chlor oder Brom. Aryl bedeutet im Sinne der vorliegenden Erfindung auch substituiertes und unsubstituiertes Heteroaryl, also zum Beispiel Pyridyl oder Pyrrolyl. Unter Alkylreste R⁵ fallen ebenfalls langkettige Alkylengruppen mit 12 bis 22 C-Atomen in der Kette, die auch über Funktionalitäten wie die Sulfonsäure-, Carbonsäure-, Phosphorsäure-, Hydroxy-, Amino- oder Ammoniumgruppe, zum Beispiel in endständiger Position, verfügen können.

Bevorzugt sind als Reste R⁵ auch solche Verbindungen, die einen elektronenziehenden Substituenten darstellen. Geeignet als elektronenziehende Substituenten sind zum Beispiel Alkylgruppen mit einem oder mehreren elektronenziehenden Resten wie Fluor, Chlor, Nitril oder Nitro in α- oder β-Position zu Z. Weiterhin geeignet sind Arylgruppen mit den genannten elektronenziehenden Resten sowie als direkt an Z gebundene Reste, auch die Nitril-, Sulfonat und Nitrogruppe. Als geeignete elektronenziehende Alkylreste seien beispielhaft die Trifluormethyl-, Trichlorethyl-, Difluormethyl-, 2,2,2-Trifluorethyl-, Nitromethyl- und die Cyanomethylgruppe genannt. Als geeignete elektronenziehende Arylreste seien beispielhaft genannt: m-, p-, o-Fluor- oder Chlorphenyl, 2,4-Difluorphenyl, 2,4-Dichlorphenyl, 2,4,6-Trifluorphenyl, 3,5-Bis(tri-fluormethyl)phenyl, Nitrophenyl, 2-Chlor-5-nitrophenyl und 2-Brom-5-nitrophenyl. In diesem Zusammenhang kommen gleichfalls Carbonyleinheiten als Reste R⁵ in Frage, so daß, wenn Z Stickstoff bedeutet, Z und R⁵ eine Carbonsäueamidfunktionalität ausbilden. Als ein solcher geeigneter Rest seien die Acetyl- oder die Trifluoracetylgruppe genannt.

Unter den Resten R⁵ sind insbesondere bevorzugt t-Butyl, Phenyl, p-Fluorphenyl, Trifluormethyl, 2,2,2-Trifluorethyl, Pentafluorphenyl, 3,5-Bis(trifluormethyl)phenyl sowie ortho-, z.B. 3,4-, meta-, z.B. 2,4-, oder para-, z.B. 2,5-Difluorphenyl.

Als Einheiten A und B gemäß Formel (I) kommen C₁- bis C₄-Alkyleneinheiten in substituierter oder unsubstituierter Form in Frage, also beispielsweise Methylen, Ethylen, Propylen oder Ethyliden, Propyliden sowie Benzyliden. Bevorzugt werden Methylen, Ethylen, Ethyliden oder Benzyliden, besonders bevorzugt Methylen eingesetzt.

A und B können ebenfalls ein ein-, zwei-, drei- oder vieratomiger Bestandteil eines aliphatischen oder aromatischen Ringsystems sein. Zum Beispiel können A und B eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A und B können des weiteren Bestandteile eines Heterocyclus sein, der aus den Komponenten A-Z(R⁵)-B, A-Z-R⁵ bzw. B-Z-R⁵ gebildet wird. A-Z-R⁵ bzw. B-Z-R⁵ können z.B. einen substituierten oder unsubstituierten Pyrrolidin- oder Piperidinring ausbilden.

Als chelatisierend wirkende Atome E¹ und E² kommen unabhängig voneinander die nichtmetallischen Elemente der Gruppe 15 des Periodensystems der Elemente in Frage, wobei bevorzugt auf Stickstoff und Phosphor, insbesondere Phosphor zurückgegriffen wird. In einer bevorzugten Ausführungsform stellen E¹ und E² in den Verbindungen gemäß Formel (I) Phosphor dar.

In dem erfindungsgemäßen Verfahren stellen die Reste R¹ bis R⁴ unsubstituiertes oder substituiertes C₁- bis C₂₈-, vorzugsweise C₃-bis C₂₀-Alkyl, C₃- bis C₁₄-, vorzugsweise C₃- bis C₈-Cycloalkyl, C₆-C₁₅-, vorzugsweise C₆-C₁₀-Aryl oder Alkylaryl mit 1 bis 28, vorzugsweise 3 bis 20 C-Atomen im Alkylteil und 6 bis 15, vorzugsweise 6 bis 10 C-Atomen im Arylteil dar. Die genannten Reste R¹ bis R⁴ können über eine oder mehrere Hydroxy-, Amino- oder Säuregruppe verfügen oder eine ionisch funktionelle Gruppe enthalten. Ionisch funktionelle Gruppen sind Gruppen auf der Basis von nichtmetallischen Elementen der Gruppen 14 bis 16 des Periodensystems der Elemente, z.B. Sulfonat, Phosphat, Ammonium, Carboxylat. Vorzugsweise stehen R¹ bis R⁴ für lineare, verzweigte oder Carbocyclen enthaltende C₁- bis C₂₈-Alkyleinheiten oder C₃- bis C₁₄-Cycloalkyleinheiten, oder C₆-C₁₅-Aryleinheiten oder Alkylarylgruppen mit 1 bis 28 C-Atomen im Alkylteil und 6 bis 15 C-Atomen im Arylteil.

Im Fall substituierter Reste R¹ bis R⁴ können auch die Salze der Carbon-, Phosphor-, Amino- oder Sulfonsäuren eingesetzt werden. Geeignete Salze sind zum Beispiel Ammonium-, Alkylammonium-, Arylammonium-, Alkali- oder Erdalkalisalze wie Natrium-, Kalium- oder Magnesiumcarboxylate oder -sulfonate.

Als Gegenionen für die genannten Ammoniumreste kommen insbesondere nicht-nucleophile Anionen, wie sie auch für die Metallkomplexe a) verwendet werden (siehe Anionen X), in Frage. Besonders geeignet sind zum Beispiel p-Toluolsulfonat, Tetrafluoroborat, Trifluoracetat, Trichloracetat, Hexafluorophoshat, Hexafluoroantimonat oder Tetraarylborate.

Besonders geeignete Arylreste R¹ bis R⁴ sind beispielsweise Aryleinheiten mit oder ohne einem oder mehreren, z.B. 1 bis 3, Heteroatomen im Ring. Diese können auch mit ein oder zwei Hydroxy-, Carbonsäure-, Sulfonsäure- oder Aminogruppen substituiert sind. Unter den Aryl- bzw. Arylenresten R¹ bis R⁴ wird der Phenyl(en)rest bevorzugt. Des weiteren können die Reste R¹ bis R⁴ auch mehr als zwei polare Gruppen aufweisen und zum Beispiel über vier oder sechs Hydroxy-, Ammonium- oder Carbonsäuregruppen verfügen. Als cycloaliphatische Reste R¹ bis R⁴ sind die Cyclopentyl- und die Cyclohexylreste bevorzugt. Besonders geeignete Alkylreste R¹ bis R⁴ sind auch beispielsweise Alkyleneinheiten ohne oder mit einer oder zwei endständigen Hydroxy-, Carbonsäure-, Sulfonsäure- oder -Ammoniumgruppen. Auch in diesen Fällen können die Reste R¹ bis R⁴ mehr als zwei polare Gruppen aufweisen und zum Beispiel über vier oder sechs Hydroxy-, Ammonium- oder Carbonsäuregruppen verfügen. Demgemäß können die Reste R¹ bis R⁴ jeweils auch über unterschiedliche funktionelle Gruppen verfügen. Auch können die Reste R¹ bis R⁴ funktionelle Gruppen in voneinander unterschiedlicher Anzahl aufweisen. Als geeignete funktionelle Gruppen kommen beispielsweise die Hydroxy-, Amin-, Carbonsäure-, Phosphorsäure-, Ammonium- und die Sulfonsäuregruppe in Frage.

Die Herstellung geeigneter propylenverbrückter Chelatligandverbindungen (R¹)(R²)E¹-G-E²(R³)(R⁴), die Bestandteil des Metallkomplexes gemäß Formel (I) sind, kann beispielsweise ausgehend von dem kommerziell erhältlichen 1,3-Dibrompropan vorgenommen werden. Über eine doppelte Arbuzov-Reaktion, zum Beispiel mit Triethylphosphit, gelangt man zu 1,3-Bisphosphonsäurederivaten, die sich reduktiv, wie in "Methoden der organischen Chemie (Houben-Weyl)", 4. Aufl., Band XII/1, Teil 1, Georg Thieme Verlag, 1963, S. 62, beschrieben, in 1,3-Diphosphinopropan überführen lassen. 1,3-Diphosphinopropan eröffnet über eine Hydrophosphinierungsreaktion mit funktionalisierten Olefinen einen flexiblen Zugang zu substituierten Bisphosphinen. Die Hydrophosphinierung verläuft im allgemeinen über einen radikalischen Mechanismus und kann thermisch, photochemisch oder mit Hilfe eines Radikalstarters initiiert werden. Für eine thermische Initiierung sind im allgemeinen Temperaturen im Bereich von 20 bis 100°C und Drücke von 0,1 bis 5 bar erforderlich. Als Radikalstarter sind zum Beispiel Di-t-butyl-peroxid oder Azo-bis-[isobuttersäurenitril] geeignet. Zur photochemischen Initiierung reicht in der Regel bereits die UV-Bestrahlung mit einer Hg-Hochdrucklampe über einen Zeitraum von 2 bis 48 Stunden für eine quantitative Hydrophosphinierung aus. Über radikalisch initiierte Verfahren werden bei der Hydrophosphinierung im allgemeinen Anti-Markovnikov-Produkte erhalten.

Für die Herstellung von Chelatliganden (R¹)(R²)E¹-G-E²(R³)(R⁴) mit Resten R¹ bis R⁴, die Carbonsäuregruppen tragen, hat es sich als vorteilhaft erwiesen, zunächst von olefinisch ungesättigten Verbindungen auszugehen, die mit entsprechenden Carbonsäureestergruppen derivatisiert sind, und diese in der Hydrophosphinierungsreaktion einzusetzen. Anschließend können die freien Carbonsäuren mittels Verseifung nach bekannten Methoden gewonnen werden.

Daneben gelingt die Darstellung geeigneter Chelatligandverbindungen (R¹)(R²)E¹-G-E²(R³)(R⁴) auch unter sauer katalysierten Bedingungen. Die nach diesem Verfahren erhaltenen Produkte fallen infolge der Isomerisierung der olefinischen Doppelbindung unter den sauren Reaktionsbedingungen häufig als Gemisch an. Der Verfahrensschritt der Hydrophosphinierung findet sich z.B. in "Methoden der organischen Chemie (Houben-Weyl)", 4. Aufl., Band XII/1, Teil 1, Georg Thieme Verlag, 1963, S. 25 bis 28, beschrieben.

Im allgemeinen sind für die genannte Hydrophosphinierungsreaktion alle Olefine geeignet. Auch Olefine, die über entsprechende funktionelle Gruppen, wie zum Beispiel Hydroxy-, Amino-, Carbonsäure-, Phosphorsäure-, Ammonium- und Sulfonsäuregruppen, verfügen, sind geeignet. In Frage kommen beispielsweise Propenylreste sowie C₄- bis C₂₈-Alkene mit mindestens einer internen oder endständigen Doppelbindung, die gegebenenfalls über eine oder mehrere Hydroxy-, Amino-, Carbonsäure-, Phosphorsäure-, Ammonium- oder Sulfonsäuregruppen verfügen. In Frage kommen ebenfalls olefinische Verbindungen mit aromatischen Resten, wobei gegebenenfalls vorhandene funktionelle Gruppe sowohl am aliphatischen als auch am aromatischen Rest vorliegen können, also beispielsweise 4-(1-Penten)-benzoesäure oder 3-Phenyl-pent-5-en-carbonsäure. Weiterhin sind olefinische Verbindungen mit aliphatischen Carbocyclen in der Alkylenkette als Substituent geeignet. Des weiteren können auch cyclische Olefine wie Cyclohexen-3-ol oder Cycloocten-4-ol verwendet werden. Selbstverständlich kann auch auf Olefine mit mehreren funktionellen Gruppen ausgewählt aus Hydroxy-, Amino-, Carbonsäure-, Phosphorsäure-, Ammonium- und Sulfonsäuregruppen zurückgegriffen werden. Bevorzugt setzt man bei der Hydrophosphinierungsreaktion der α, ω-Bisphosphine geeignete Alkene mit α-olefinischer Doppelbindung ein. Als solche kommen zum Beispiel auch heteroatomhaltige α-Olefine, wie (Meth)acrylsäureester oder -amide sowie Homoallyl- oder Allylalkohole in Betracht.

Im Fall von aromatischen Resten R¹ bis R⁴ können Chelatliganden (R¹)(R²)E¹-G-E²(R³)(R⁴), die Sulfonsäuregruppen enthalten, durch Umsetzung nicht-sulfonsäurehaltiger Chelatliganden mit SO₃, Chlorsulfonsäure, rauchender Schwefelsäure oder Oleum hergestellt werden, wie dies in Jiang et al., Macromolecules 27 (1994) 7215-7216 oder Verspui et al., Chem. Commun., 1998, 401-402 bzw. in J. March "Advanced Organic Chemistry", John Wiley & Sons (NY), 1985, 3^{rd} Edition S. 473-475 beschrieben ist.

Weitere Synthesen für Chelatliganden (R¹)(R²)E¹-G-E²(R³)(R⁴) mit aromatischen Resten R¹ bis R⁴ sind beschrieben in:
- "Phosphorus - An outline of its Chemistry, Biochemistry and Technical Chemistry" D.E.C. Corbridge, Elsevier (Amsterdam, Tokyo, New York) 1990, 4th. Edition, Chapter 8, und darin zitierte Literatur
- S.O. Grim, R.C. Barth, J. of Organomet. Chem. 94, 1975, S. 327
- WO98/22482

In einer besonders bevorzugten Ausführungsform des Chelatliganden (R¹)(R²)E¹-G-E²(R³)(R⁴) verfügen die Reste R¹ bis R⁴ als Arylsubstituenten über 6 bis 15, insbesondere 6 bis 10 C-Atome, wobei die genannten Reste auch substituiert sein können.

Geeignet als Chelatliganden (R¹)(R²)E¹-G-E²(R³)(R⁴) sind beispielsweise
1,3-Bis[diphenylphosphino]propan,
1,3-Bis[di-(o-methoxyphenyl)phosphino]propan,
1,3-Bis[di-(4-phenylbutyl)phosphino]propan,
1,3-Bis[di-(5-phenylpentyl)phosphino]propan,
1,3-Bis[di-(hydroxyphenyl)phosphino]propan,
1,3-Bis[di-(phenylsulfonsäure)phospino]propan, bevorzugt als meta-Isomer, sowie dessen Salze,
1,3-Bis[di-(carboxyphenyl)phospino]propan sowie dessen Salze,
1,3-Bis[di-(o-methoxyhydroxyphenyl)phosphino]propan,
1,3-Bis[di-(4-(phenylsulfonsäure)butyl)phosphino]propan, Na-Salz,
1,3-Bis[di-(5-(phenylsulfonsäure)pentyl)phosphino]propan,
Na-Salz,
Bis(diphenylphosphinomethyl)phenylamin,
Bis(diphenylphosphinomethyl)tert.-butylamin,
Bis(diphenylphosphinomethyl)-(2,4-difluorphenyl)amin,
Bis(diphenylphosphinomethyl)-(2,2,2-trifluorethyl)amin.

Besonders bevorzugt unter den genannten Chelatligandverbindungen sind jene, in denen die Reste R¹ bis R⁴ einen ohne oder mit einer oder mehreren, z.B. 1 bis 3, Hyaroxy-, Sulfonsäure oder Carbonsäuregruppen substituierten Phenylrest darstellen.

In einer besonders bevorzugten Ausführungsform des Chelatliganden (R¹)(R²)E¹-G-E²(R³)(R⁴) verfügen die Reste R¹ bis R⁴ als Alkylsubstituenten über 4 bis 22, insbesondere 5 bis 20 C-Atome. Die genannten Reste können auch substituiert sein.

Geeignet als Chelatliganden (R¹)(R²)E¹-G-E²(R³)(R⁴) sind beispielsweise
1,3-Bis(dibutylphosphino)propan,
2,3-Bis(dihexylphosphino)propan,
1,3-Bis(diheptylphosphino)propan,
Bis[(dibutylphosphino)methyl]phenylamin,
Bis[(dihexylphosphino)methyl]phenylamin,
Bis[(diheptylphosphino)methyl]phenylamin,
1,3-Bis(di-4-hydroxybutylphosphino)propan,
1,3-Bis(di-6-hydroxyhexylphosphino)propan,
1,3-Bis(di-7-hydroxyheptylphosphino)propan,
1,3-Bis(di-8-hydroxyoctylphosphino)propan,
1,3-Bis(di(3-hydroxycyclopentyl)propylphosphino)propan,
1,3-Bis[di-6-(sulfonsäure)hexylphosphino]propan,
1,3-Bis[di-8-(sulfonsäure)octylphosphino]propan,
1,3-bis[di(3-(sulfonsäure)cyclopentyl)propylphosphino]propan,
1,3-Bis(di-propylmalonsäurephosphino)propan,
1,3-Bis(di-6-hexansäurephosphino)propan,
1,3-Bis(di-7-heptansäurephosphino)propan,
Bis[(di-4-hydroxybutyl)phosphinomethyl]phenylamin,
Bis[(di-6-hydroxyhexyl)phosphinomethyl]phenylamin,
Bis[(di-7-hydroxyheptyl)phosphinomethyl]phenylamin,
Bis[(di-3-hydroxycyclopentyl)propyl]phenylamin,
Bis[(di-6-(sulfonsäure)hexyl)phospinomethyl]phenylamin,
Bis[(di-7-(sulfonsäure)heptyl)phosphinomethyl]phenylamin,
Bis[(di(3-sulfonsäure)cyclopentylpropyl)phospinomethyl]phenylamin,
Bis[(di-6-hexansäure)phospinomethyl]phenylamin,
Bis[(di-7-heptansäure)phosphinomethyl]phenylamin und
1,3-Bis[di-(4-methylol-5-hydroxyisopentyl)]phosphinopropan.

Besonders bevorzugt unter den genannten Chelatligandverbindungen sind jene, in denen die Reste R¹ bis R⁴ einen ohne oder mit einer Hydroxy- oder Carbonsäuregruppe substituierten Hexyl-, 4-Methylpentyl, Octyl-, Cyclopentyl- oder Cyclohexylrest darstellen.

Als Metalle M des erfindungsgemäßen Verfahrens eignen sich die Metalle der Gruppen 8, 9, 10, 11 und 12 des Periodensystems der Elemente, also neben Eisen, Cobalt und Nickel vornehmlich die Platinmetalle wie Ruthenium, Rhodium, Osmium, Iridium und Platin sowie ganz besonders bevorzugt Palladium. Die Metalle können in den Komplexen gemäß Formel (I) formal ungeladen, formal einfach oder dreifach positiv geladen oder vorzugsweise formal zweifach positiv geladen vorliegen.

Geeignete formal geladene anionische Liganden L¹, L² sind Hydrid, Halogenide, Sulfate, Phosphate oder Nitrate. Des weiteren sind geeignet Carboxylate oder Salze organischer Sulfonsäuren wie Methylsulfonat, Trifluormethylsulfonat oder p-Toluolsulfonat. Unter den Salzen organischer Sulfonsäuren ist p-Toluolsulfonat bevorzugt. Als formal geladene Liganden L¹, L² sind Carboxylate, bevorzugt C₁- bis C₂₀-Carboxylate und insbesondere C₁- bis C₇-Carboxylate, also z.B. Acetat, Trifluoracetat, Propionat, Oxalat, Citrat oder Benzoat bevorzugt. Besonders bevorzugt ist Acetat.
Geeignete formal geladene organische Liganden L¹, L² sind auch C₁- bis C₂₀-aliphatische Reste, C₃- bis C₃₀-cycloaliphatische Reste, C₇- bis C₂₀-Aralkylreste mit C₆- bis C₁₄-Arylresten und C₁- bis C₆-Alkylresten sowie C₆- bis C₂₀-aromatische Reste, beispielsweise Methyl, Ethyl, Propyl, i-Propyl, t-Butyl, n-, i-Pentyl, Cyclohexyl, Benzyl, Phenyl und aliphatisch oder aromatisch substituierte Phenylreste.

Als formal ungeladene Liganden L¹, L² sind generell Lewisbasen geeignet, also Verbindungen mit mindestens einem freien Elektronenpaar. Besonders gut geeignet sind Lewisbasen deren freies Elektronenpaar oder deren freie Elektronenpaare sich an einem Stickstoff- oder Sauerstoffatom befinden, also beispielsweise Nitrile, R-CN, Ketone, Ether, Alkohole oder Wasser. Vorzugsweise verwendet man C₁- bis C₁₀-Nitrile wie Acetonitril, Propionitril, Benzonitril oder C₂- bis C₁₀-Ketone wie Aceton, Acetylaceton oder aber C₂- bis C₁₀-Ether, wie Dimethylether, Diethylether, Tetrahydrofuran. Insbesondere verwendet man Acetonitril, Tetrahydrofuran oder Wasser.

Grundsätzlich können die Liganden L¹ und L² in jeder beliebigen Ligandkombination vorliegen, d.h. der Metallkomplex (I) kann zum Beispiel einen Nitrat- und einen Acetatrest, einen p-Toluolsulfonat- und einen Acetatrest oder einen Nitrat- und einen formal geladenen organischen Liganden wie Methyl enthalten. Bevorzugt liegen in den Metallkomplexen L¹ und L² als identische Liganden vor.

Je nach formaler Ladung des das Metall M enthaltenden Komplexfragments enthalten die Metallkomplexe Anionen X. Ist das M-enthaltende Komplexfragment formal ungeladen, so enthält der erfindungsgemäße Komplex gemäß Formel (I) kein Anion X. Vorteilhafterweise werden Anionen X eingesetzt, die möglichst wenig nucleophil sind, d.h. eine möglichst geringe Tendenz haben, mit dem Zentralmetall M eine starke Wechselwirkung, ob ionisch, koordinativ oder kovalent, einzugehen.

Geeignete Anionen X sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis[bis(3,5-trifluormethyl)phenyl]borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrafluoroborat oder Hexafluorophosphat und insbesondere Trifluormethylsulfonat, Trifluoracetat, Perchlorat, p-Toluolsulfonat oder Tetrafluoroborat.

Als definierte Metallkomplexe a) sind zum Beispiel folgende Palladium(II)-acetat-komplexe geeignet:
[1,3-Bis(diphenylphosphino)propan]-,
[1,3-Bis(di-o-methoxyphenylphosphino)propan]-,
[1,3-Bis(dibutylphosphino)propan]-,
[1,3-Bis(dipentylphosphino)propan]-,
[1,3-Bis(dihexylphosphino)propan]-,
[1,3-Bis(dioctylphosphino)propan]-,
[1,3-Bis(dicyclohexylpropylphosphino)propan]-,
[1,3-Bis(di-hydroxyphenylphosphino)propan]-,
[1,3-Bis(di-4-hydroxybutylphosphino)propan]-,
[1,3-Bis(di-4-methylol-5-hydroxypentylphosphino)propan]-,
[1,3-Bis(di-5-hydroxypentylphosphino)propan]-,
[1,3-Bis(di-6-hydroxyhexylphosphino)propan]-,
[1,3-Bis(di(3-hydroxycyclopentyl)propylphosphino)propan]-,
[1,3-Bis(di-8-hydroxyoctylphosphino)propan]-,
[1,3-Bis(di-3-hydroxycyclohexylpropylphosphino)propan]-,
[1,3-Bis(di-sulfonatophenylphosphino)propan]-,
[1,3-Bis(di-4-sulfonatobutylphosphino)propan]-,
[1,3-Bis(di-4-methylol-5-sulfonatopentylphosphino)propan]-,
[1,3-Bis(di-5-sulfonatopentylphosphino)propan]-,
[1,3-Bis(di-6-sulfonatohexylphosphino)propanl-,
[1,3-Bis(di(3-sulfonatocyclopentyl)propylphosphino)propan]-,
[1,3-Bis(di-8-sulfonatooctylphosphino)propan]-,
[1,3-Bis(di-3-sulfonatocyclohexylpropylphosphino)propan]-,
[1,3-Bis(di-carboxyphenylphospino)propan]-,
[1,3-Bis(di-4-carboxybutylphosphino)propan]-,
[1,3-Bis(di-4-methylol-5-carboxypentylphosphino)propan]-,
[1,3-Bis(di-5-carboxypentylphosphino)propan]-,
[1,3-Bis(di-6-carboxyhexylphosphino)propan]-,
[1,3-Bis(di(3-carboxycyclopentyl)propylphosphino)propan]-,
[1,3-Bis(di-8-carboxyoctylphosphino)propan]-,
[1,3-Bis(di-3-carboxycyclohexylpropylphosphino)propan]-,
[Bis(diphenylphosphinomethyl)phenylamin]-,
[Bis(diphenylphosphinomethyl)tert.-butylamin]-,
[Bis(diphenylphosphinomethyl)-(2,4-difluorphenyl)amin]-,
[Bis(diphenylphosphinomethyl)-(2,2,2-trifluorethyl)amin]-palladium(II)acetat.

Definierte Metallkomplexe gemäß Formel (I) können nach folgenden Verfahren hergestellt werden.

Die Herstellung erfolgt für die neutralen Chelatkomplexe (p = 0) durch Austausch von schwach koordinierenden Liganden, wie zum Beispiel 1,5-Cyclooctadien, Benzonitril oder Tetramethylethylendiamin, die an die entsprechenden Übergangsmetallverbindungen, beispielsweise Übergangsmetall-Halogenide, Übergangsmetall-(Alkyl)(Halogenide), Übergangsmetall-Diorganyle, gebunden sind, gegen die Chelatliganden (R¹)(R²)E¹-G-E²(R³)(R⁴) in der vorhergehend beschriebenen Bedeutung.

Die Reaktion wird im allgemeinen in einem polaren Lösungsmittel, wie beispielsweise Acetonitril, Aceton, Ethanol, Diethylether, Dichlormethan oder Tetrahydrofuran oder deren Gemischen bei Temperaturen im Bereich von -78 bis +90°C durchgeführt.

Des weiteren können neutrale Metallkomplexe gemäß Formel (I), in denen L¹ und L² Carboxylat, z.B. Acetat, bedeuten, durch Umsetzung von Übergangsmetallsalzen wie beispielsweise Pd(OAc)₂ mit den beschriebenen Chelatliganden (R¹) (R²)E¹-G-E²(R³) (R⁴) in Acetonitril, Aceton, Ethanol, Diethylether, Dichlormethan, Tetrahydrofuran oder Wasser bei Raumtemperatur hergestellt werden. Auch Lösungsmittelgemische können dabei verwendet werden.

Als weitere Synthesemethode kommt die Umsetzung der Metallkomplexe der allgemeinen Formel (I) mit Organometallverbindungen der Gruppen 1, 2, 12 und 14 in Frage, beispielsweise C₁- bis C₆-Alkyle der Metalle Lithium, Aluminium, Magnesium, Zinn, Zink, wobei formal geladene anorganische Liganden L¹, L², wie vorher definiert, gegen formal geladene aliphatische, cycloaliphatische oder aromatische Liganden L¹, L², wie ebenfalls vorher definiert, ausgetauscht werden. Die Reaktion wird im allgemeinen in einem Lösungsmittel wie beispielsweise Diethylether oder Tetrahydrofuran bei Temperaturen im Bereich von -78 bis 65°C durchgeführt.

Monokationische Komplexe der allgemeinen Formel (I) (p=1) können zum Beispiel durch Umsetzung von (Chelatligand) Metall (Acetat) (Organo) oder (Chelatligand) Metall (Halogeno) (Organo)-Komplexen mit stöchiometrischen Mengen eines Metallsalzes M'X erhalten werden. Die Umsetzungen werden im allgemeinen in koordinierenden Lösungsmitteln wie beispielsweise Acetonitril, Benzonitril, Tetrahydrofuran oder Ether bei Temperaturen im Bereich von -78 bis 65°C durchgeführt.

Es ist vorteilhaft, wenn die Metallsalze M'X folgende Kriterien erfüllen. Das Metall M' soll vorzugsweise schwer lösliche Metallhalogenide bilden, wie zum Beispiel Silberchlorid. Das Salz-Anion soll vorzugsweise ein nicht-nucleophiles Anion X, wie vorher definiert, sein.

Gut geeignete Salze für die Bildung von kationischen Komplexen sind z.B. Silbertetrafluoroborat, Silberhexafluorophosphat, Silbertrifluormethansulfonat, Silberperchlorat, Silberparatoluolsulfonat, Silbertrifluoracetat und Silberhexafluorantimonat, Natriumtetraphenylborat, Natriumtetrakis(pentafluorophenyl)borat, Silbertrifluoracetat oder auch Natriumtetrakis(3,5-bis (trifluormethyl)phenyl)borat.

Die dikationischen Komplexe (p = 2) werden analog den monokationischen Komplexen hergestellt, nur daß anstatt der (Chelatligand)Metall(Acetat)(Organo)- oder der (Chelatligand)Metall(Halogeno)(Organo)-Komplexe die (Chelatligand)Metall(diacetat)-bzw. (Chelatligand)Metall(di-Halogeno)-Komplexe als Vorstufe sowie zwei Äquivalente des Metallsalzes eingesetzt werden.

Als weiteres Verfahren zur Herstellung der dikationischen Komplexe gemäß Formel (I) kommt die Umsetzung von [Q₄M]X₂ mit den eingangs definierten Chelatliganden (R¹)(R²)E¹-G-E²(R³)(R⁴) in Frage. Hierbei bedeutet Q gleiche oder unterschiedliche schwache Liganden wie beispielsweise Acetonitril, Benzonitril oder 1,5-Cyclooctadien, M und X haben die vorher definierte Bedeutung.

Die trikationischen Komplexe (p=3) gemäß Formel (I) werden analog zu den genannten Verfahren hergestellt.

Ein bevorzugtes Verfahren zur Herstellung der Metallkomplexe der allgemeinen Formel (I) ist die Umsetzung der Dihalogenmetallvorläuferkomplexe mit Silbersalzen enthaltend nicht-koordinierende Anionen.

Zur Katalysatoraktivierung kann auf geeignete Säuren b) zurückgegriffen werden. Als Aktivatorverbindungen kommen sowohl mineralische Protonensäuren als auch Lewis-Säuren in Frage. Geeignet als Protonensäuren sind zum Beispiel Schwefelsäure, Salpetersäure, Borsäure, Tetrafluorborsäure, Perchlorsäure, p-Toluolsulfonsäure, Trifluoressigsäure, Trifluormethansulfonsäure oder Methansulfonsäure. Bevorzugt wird auf p-Toluolsulfonsäure und Tetrafluorborsäure zurückgegriffen.
Als Lewis-Säuren kommen beispielsweise Borverbindungen wie Triphenylboran, Tris(pentafluorphenyl)boran, Tris(p-chlorphenyl)boran oder Tris(3,5-bis-(trifluormethyl)phenyl)boran oder Aluminium-, Zink-, Antimon- oder Titanverbindungen mit lewissaurem Charakter in Frage. Es können auch Mischungen von Protonensäuren bzw. Lewis-Säuren sowie Protonen- und Lewis-Säuren im Gemisch eingesetzt werden.

Als Coaktivatoren geeignete Hydroxyverbindungen c) sind alle Stoffe, die eine oder mehrere Hydroxylgruppen besitzen. Bevorzugt sind niedere Alkohole mit 1 bis 6 C-Atomen wie Methanol, Ethanol, n-oder iso-Propanol, n-Butanol, sec.-Butanol oder tert.-Butanol. Außerdem können aromatische Hydroxyverbindungen, wie z.B. Phenol, eingesetzt werden. Ebenfalls geeignet sind z.B. Zucker wie Fructose, Glucose, Lactose. Weiterhin geeignet sind Polyalkohole wie Ethylenglykol, Glyzerin oder auch Polyvinylalkohol. Selbstverständlich können auch Mischungen mehrerer Coaktivatoren eingesetzt werden.

Die erfindungsgemäße Copolymerisation von Kohlenmonoxid und olefinisch ungesättigten Verbindungen der Komponenten K1 und K2 in Gegenwart der Metallkomplexe a) oder deren Einzelkomponenten und ggf. Säure b) und ggf. Hydroxyverbindung c) zeichnet sich dadurch aus, daß zu einer laufenden Copolymerisation von Kohlenmonoxid und Komponente K1 pulsweise Komponente K2 zudosiert wird.

Die laufende Copolymerisation von Kohlenmonoxid und Komponente K1 kann in Lösung oder Suspension in organischem oder wäßrigem Medium, prinzipiell aber auch in der Gasphase, ablaufen. Geeignete Lösungs- bzw. Suspensionsmittel sind beispielsweise aliphatische oder aromatische Kohlenwasserstoffe wie Pentan, Hexan, Heptan, Ligroin, Cyclohexan, Benzol, Toluol, Xylol, Alkohole wie Methanol, Ethanol, n-Propanol, i-Propanol, n-Butanol, i-Butanol, Ether wie Diethylether, p-Dioxan, halogenierte Kohlenwasserstoffe wie Dichlormethan, Chlorbenzol, o-Dichlorbenzol, aber auch Sulfolan, Dimethylsulfoxid, Pyridin, Dimethylformamid, N-Methylpyrrolidon, Cyclohexanon, Aceton, Wasser, Phenol, Kresol, Acetonitril oder Gemische dieser Verbindungen.
Bevorzugte Lösungs- bzw. Suspensionsmittel sind Dichlormethan, Wasser, Methanol oder Toluol.

Die Copolymerisation von Kohlenmonoxid und Komponente K1 kann sowohl diskontinuierlich, z.B. in Rührautoklaven, als auch kontinuierlich, z.B. in Rohrreaktoren, Schlaufenreaktoren oder Rührkesselkaskaden durchgeführt werden. Bei diskontinuierlicher Verfahrensführung werden Kohlenmonoxid, Komponente K1, Metallkomplex a) oder dessen Bestandteile, ggf. Säure b), ggf. Hydroxyverbindung c) und ggf. Lösungsmittel vorgelegt, bei der kontinuierlichen verfahrensführung werden einzelne, mehrere oder alle der genannten Reaktionspartner oder -medien kontinuierlich dem Reaktionssystem zugeführt.

Die Zugabe der Aktivatorspezies b) kann entfallen, wenn der Chelatligand über Reste R¹ bis R⁴ verfügt, die mindestens eine freie Sulfon- oder Carbonsäuregruppe aufweisen. Auf die Anwesenheit des Coaktivators c) kann ebenfalls verzichtet werden, insbesondere dann, wenn ein hydroxygruppenenthaltendes Lösungsmittel verwendet wird.

Das Polymerisationsgemisch wird zur Erlangung reproduzierbar guter Produktivitäten vorzugsweise kräftig durchgemischt. Hierfür kann auf geeignete Rührwerkzeuge wie Anker- oder Wendelrührer zurückgegriffen werden. Geeignete Rührgeschwindigkeiten liegen im Bereich von 100 bis 1100 Upm, vorzugsweise oberhalb 150 Upm.

Die katalytisch wirksame Spezies a) kann prinzipiell nach zwei Vorgehensweisen gebildet und eingesetzt werden. Nach der einen Variante kommen die vorgenannten definierten Metallkomplexe a) direkt zum Einsatz, d.h. diese Komplexe werden separat hergestellt und als solche zum Reaktionsgemisch gegeben bzw. im Reaktionsbehältnis vorgelegt. In einer zweiten Variante werden die die katalytisch aktive Spezies bildenden Bestandteile einzeln zum Reaktionsgemisch gegeben. Bei dieser in-situ Generierung des Katalysators wird im allgemeinen das Metall M in Salzform oder als Komplexsalz dem Reaktionsgefäß zugeführt. Des weiteren werden die Chelatligandverbindung (R¹)(R²)E¹-G-E²(R³)(R⁴) und die Liganden L¹ und L² zugesetzt.
In der Regel gehen mit der Verwendung definierter Metallkomplexe a) höhere Produktivitäten als mit dem in-situ-Verfahren einher.

Das molare Verhältnis von Kohlenmonoxid zu olefinisch ungesättigten Verbindungen der Komponente K1 bewegt sich in der Regel im Bereich von 5:1 bis 1:500, üblicherweise werden Werte im Bereich von 2:1 bis 1:100 benutzt.

Die üblicherweise eingesetzte Menge an Metallkomplex a) oder dessen Einzelbestandteilen liegt im Bereich von 10⁻⁷ bis 10⁻³ mol, bezogen auf die Menge an Metall M, pro mol ungesättigter Verbindungen der Komponente K1, bevorzugt ist eine Menge von 10⁻⁶ bis 10⁻⁴ mol M pro mol ungesättigter Verbindungen der Komponente K1.

Das molare Verhältnis von Aktivator b) zu Metallkomplex a), bezogen auf die Menge an Metall M, liegt im allgemeinen im Bereich 60:1 bis 1:1, bevorzugt von 25:1 bis 2:1 und besonders bevorzugt von 12:1 bis 3:1 für die Fälle, in denen die funktionellen Gruppen der Reste R¹ bis R⁴ keine Sulfon- oder Carbonsäurefunktionalitäten sind. Selbstverständlich kann auch bei Metallkomplexen mit Chelatliganden, die die vorgenannten funktionellen Säuregruppen tragen, Aktivatorverbindung b) zum Polymerisationsgemisch gegeben werden.

Das molare Verhältnis von Hydroxyverbindung c) zu Metallkomplex a), bezogen auf die Menge an Metall M, liegt im allgemeinen im Bereich 100000 bis 0, bevorzugt 50000 bis 500 und besonders bevorzugt 10000 bis 1000.

Die Copolymerisationstemperatur wird im allgemeinen in einem Bereich von 0 bis 200°C eingestellt, wobei bevorzugt bei Temperaturen im Bereich von 20 bis 130°C copolymerisiert wird. Der Druck liegt im allgemeinen im Bereich von 2 bis 300 bar und insbesondere im Bereich von 20 bis 220 bar.

In den erfindungsgemäßen Verfahren werden mittlere Katalysatoraktivitäten erhalten, die im allgemeinen größer 0,2 kg Polymer pro g (Metall) pro h sind.

Die Isolierung und Reinigung der aus Kohlenmonoxid und den Komponenten K1 und K2 gebildeten Polyketone erfolgt nach den üblichen Methoden, beispielsweise Fällung und Filtration oder Abziehen von Lösungsmittel, Waschen und Trocknung.

Das erfindungsgemäße Verfahren zur Herstellung von Kohlenmonoxidcopolymeren ist grundsätzlich für Komponenten K2 geeignet, die eine größere, gleich große oder kleinere Reaktivität besitzen als Komponente K1. Bevorzugt ist aber die Reaktivität von K2 größer als die von K1. Der Aufbau der erfindungsgemäßen Polyketone erfolgt dann nach folgendem Prinzip.

Durch die laufende Polymerisation von Kohlenmonoxid und Komponente K1 wird in der Polymerkette ein Segment gebildet, das alternierend aus K1 und CO aufgebaut ist, also ausschließlich aus K1/CO-Einheiten besteht. Wird nach einer bestimmten Zeit ein Puls Komponente K2 zugegeben, die in einer bevorzugten Ausührungsform schneller reagiert als K1, so werden in die wachsende Polymerkette bevorzugt CO und K2 eingebaut. Im Makromolekül wird also ein Segment gebildet, in dem statistisch verteilt K2/CO-Einheiten und K1/CO-Einheiten enthalten sind, wobei die erstgenannten in größerer Anzahl vertreten sind. Mit zunehmendem Verbrauch von K2 steigt der Anteil von K1/CO-Einheiten in dem genannten Segment an. Die Restkonzentration von K2 ist schließlich so niedrig, daß im weiter wachsenden Polymermolekül wieder ein Segment gebildet wird, welches praktisch auschließlich aus K1/CO-Einheiten besteht. Das genannte Vorgehen kann prinzipiell beliebig oft wiederholt werden.

Liegen die Reaktivitäten von K1 und K2 sehr weit auseinander, z.B. Faktor 1000 oder mehr, so bestehen die einzelnen Segmente jeweils auschließlich aus K1/CO- bzw. K2/CO-Einheiten. Man erhält also ein Blockcopolymer. Sind die Reaktivitäten von K1 und K2 identisch, erfolgt nach einem Puls ein statistischer Einbau von K1 und K2 in das neu begonnene Segment, wobei der Anteil von K2/CO-Einheiten nur noch vom Konzentrationsverhältnis von K1 und K2 abhängig ist. Dieser Anteil nimmt mit wachsender Länge des Segments ab und erreicht schließlich nach nahezu vollständigem Verbrauch von K2 einen Wert nahe Null. Im Makromolekül wird nun wieder ein neues Segment bestehend praktisch ausschließlich aus K1/CO-Einheiten, aufgebaut.

Die erfindungsgemäßen Kohlenmonoxid-Copolymere zeichnen sich also dadurch aus, daß die Makromoleküle aus voneinander verschiedenen Kettensegmenten aufgebaut sind, wobei innerhalb jedes einzelnen Kettensegments eine statistische Verteilung von aus Kohlenmonoxid und K1 und aus Kohlenmonoxid und K2 aufgebauten Einheiten vorliegt und wobei für je zwei aufeinanderfolgende Kettensegmente gilt: V≠1, wobei V definiert ist als:
[(Anzahl aus Kohlenmonoxid und K1 aufgebauter Einheiten in einem gegebenen Kettensegment) / (Anzahl aus Kohlenmonoxid und K2 aufgebauter Einheiten in einem gegebenen Kettensegment)] /
   [(Anzahl aus Kohlenmonoxid und K1 aufgebauter Einheiten im anschließenden Kettensegment) / (Anzahl aus Kohlenmonoxid und K2 aufgebauter Einheiten im anschließenden Kettensegment)]

Bevorzugt ist V < 0,9 oder V > 1,1.

Generell ergeben sich so nach dem erfindungsgemäßen Verfahren Polymere, welche in ihren Eigenschaften durch die Kombination der Eigenschaften der einzelnen Segmente ausgezeichnet sind. So können steife, amorphe oder teilkristalline Segmente mit elastischen Segmenten kombiniert sein.

Durch den speziellen Aufbau der Makromoleküle der erfindungsgemäßen Polyketone ergibt sich im Copolymer z.B. eine flexible Matrix, gebildet aus K1/CO-reichen Segmenten, welche durch K2/CO-reiche Segmente, die z.B. stabile Kristallite bilden, versteift wird. Diese Polymerstruktur begründet die hervorragenden mechanischen Eigenschaften, insbesondere die ausgezeichnete Elastizität.

Typischerweise bestehen die erfindungsgemäßen Kohlenmonoxid-Copolymere zu 1 bis 99, bevorzugt 20 bis 80, Massen-% aus Einheiten, die aus Kohlenmonoxid und K1 aufgebaut wurden, und 99 bis 1, bevorzugt 80 bis 20, Massen-% aus Einheiten, die aus Kohlenmonoxid und K2 aufgebaut wurden.

Die erhältlichen Molgewichte liegen im Bereich von M_{w} = 30000 bis 1200000, bevorzugt 80000 bis 500000, besonders bevorzugt 100000 bis 400000.

Die Polydispersitäten der erfindungsgemäßen Kohlenmonoxid-Copolymere liegen üblicherweise im Bereich von 1,5 bis 5.

Die erfindungsgemäßen Polyketone können unmodifiziert oder mit zusätzlichen Additiven auf die für Thermoplaste gängige Weise durch Extrusion, Spritzguß, Blasformen oder auch andere Gieß- oder Preßformgebungsverfahren zur Herstellung von Fasern, Folien oder Formkörpern verwendet werden.

Als Additive können beispielsweise die im folgenden genannten Stoffe eingesetzt werden.

Bevorzugte faserförmige Füll- oder Verstärkungsstoffe sind Kohlenstoffasern, Kaliumtitanatwhisker, Aramidfasern und besonders bevorzugt Glasfasern. Diese können zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Geweben, Matten oder Glasseidenrovings eingesetzt werden.

Als teilchenförmige Füllstoffe eignen sich vor allem amorphe Kieselsäure, Magnesiumcarbonat (Kreide), gepulverter Quarz, Glimmer, Talkum, Feldspat, Glaskugeln und insbesondere Calciumsilikate wie Wollastonit und Aluminiumsilikate wie Kaolin (insbesondere kalzinierter Kaolin). Auch diese sind meist mit einer Schlichte ausgerüstet.

Gängige Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃·Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine eingesetzt werden. Derartige Pigmente sind allgemein im Handel üblich.

Oxidationsverzögerer und Wärmestabilisatoren, die den Polyketonen gemäß der Erfindung zugesetzt werden können, sind z.B. Halogenide von Metallen der Gruppe 1 des Periodensystems, z.B. Natrium-, Kalium-, Lithium-Halogenide, ggf. in Verbindung mit Kupfer-(I)-Halogeniden, z.B. Chloriden, Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze und Estern und Mischungen dieser Verbindungen einsetzbar.

Weiterhin eignet sich bei CO-Olefin-Copolymeren auch der Zusatz von anorganischen Phosphaten, Sulfaten, Boraten, Hydroxiden oder Oxiden. Bevorzugt sind hier Phosphate der Erdalkalimetalle wie Ca₃(PO₄)₂ oder Hydroxyapatit.

Als Flammschutzmittel können insbesondere phosphorhaltige Verbindungen eingesetzt werden. Beispiele hierfür sind Phosphorsäureester, Phosphinsäureester, Phosphinoxide, Phosphor oder organische Phosphate. Die phosphorhaltigen Verbindungen können auch in Mischung mit einem Triazinderivat oder Polytetrafluorethylen eingesetzt werden. Bevorzugt werden Triarylphosphinoxide oder Triarylphosphate verwendet.

Beispiele für UV-Stabilisatoren sind verschiedene substituierte Resorcine, Salicylate, Benzotriazole und Benzophenone.

Gleit- und Entformungsmittel sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden. Geeignet sind auch Copolymere von Olefinen und Acrylsäuren oder Acrylsäureestern als Verarbeitungshilfsmittel.

Die erfindungsgemäßen Fasern, Folien oder Formkörper eignen sich beispielsweise für den Einsatz im Automobil-, Elektro- und Elektronikbereich.

Das erfindungsgemäße Verfahren ist im Hinblick auf erreichbare Katalysatoraktivitäten, Molekulargewichte, deren Verteilung sowie bezüglich der erreichbaren Einbauraten von Olefinen mit unterschiedlichsten Reaktivitäten besonders effektiv. Die erfindungsgemäßen Kohlenmonoxidcopolymere besitzen hervorragende thermische und mechanische Eigenschaften, insbesondere eine hervorragende Elastizität.

Die vorliegende Erfindung wird anhand der nachfolgenden Beispiele näher erläutert, ohne jedoch von diesen beschränkt zu werden.

### Beispiele 1 bis 3:

In einen 250 ml-Rührautoklaven gab.man 100 ml mittels LiAlH₄ absolutierten CH₂Cl₂, 30 mg [Pd(dppp)(NCCH₃)₂](BF₄)₂ (dppp = 1,3-Bis(diphenylphosphino)propan) und 0,25 ml Methanol. Anschließend wurden 100 g Propen einkondensiert, der Autoklav geschlossen, die Rührgeschwindigkeit auf 1000 U/min eingestellt und bei Raumtemperatur Kohlenmonoxid bis zu einem Gesamtdruck von 60 bar aufgepreßt. Der Gesamtdruck von 60 bar wurde während der gesamten anschließenden Polymerisation durch kontinuierliches Nachpressen von CO konstant gehalten. Die Polymerisation erfolgte bei Raumtemperatur. Nach jeweils 90 (Beispiel 1), 60 (Beispiel 2) bzw. 30 Minuten (Beispiel 3) wurde jeweils für 0,1 Sekunden ein Ethen-Puls in den Autoklaven geleitet. Das Ethen stand dabei unter einem Vordruck von 75 bar. Die während eines Pulses eingetragene Menge Ethen betrug 0,4 g. Die Gesamtreaktionsdauer betrug 10 Stunden. Durch Entspannen des Reaktionsgefäßes wurde die Reaktion abgebrochen. Die Reaktionslösung wurde mit CH₂Cl₂ verdünnt, und über Kieselgel filtriert. Nach Abdampfen des Lösungsmittels wurden die Kohlenmonoxidcopolymeren in Form klarer elastischer Folien erhalten. Diese sowie die in den folgenden (Vergleichs-)beispielen erhaltenen Polyketone wurden mit den im folgenden beschriebenen Methoden untersucht.

Kernresonanzspektren wurden in CDCl₃-Lösung auf einem 500 MHz NMR AMX 500 der Firma Bruker, Infrarot Spektren als Folien oder KBr-Preßlinge mit einem Bruker FT-IR IFS 113v® Spektrometer aufgenommen. Elementaranalysen wurden auf Heraeus CHN-rapid® bestimmt. Zug/Dehnungsmessungen wurden mit einer Zwick 1445® bei 10 mm/min durchgeführt. Die Proben für die Zug/Dehnungsmessungen wurden durch Lösen in CH₂Cl₂ und folgendes Abdampfen als Folien hergestellt. Die Proben für die Kraftmikroskopie wurden aus 0,1 g/l CH₂Cl₂-Lösung durch Spincasting auf Glimmer aufgebracht und 20 min bei 80°C getempert. Das verwendete Instrument war ein Nanoscope III® von Digital Instruments, Santa Barbara, CA. Die Abbildungen erfolgten im Tapping Mode bei einer Resonanzfrequenz von ca. 360 kHz. Gelpermeations-Chromatographie wurde auf einer Waters GPC® mit CHCl₃, Styragelsäulen® und einem Brechungsindex-Detektor gegen Polystyrolstandard gemessen.

### Vergleichsbeispiel 4:

Der Versuch wurde wie bei Beispielen 1 bis 3 beschrieben durchgeführt, mit dem Unterschied, daß kein Ethen zudosiert wurde. Als Produkt wurde ein Kohlenmonoxid-Propen-Copolymer erhalten.

### Vergleichsbeispiel 5:

Der Versuch wurde wie bei Beispiel 4 beschrieben durchgeführt, mit dem Unterschied, daß anstelle von 100 g Propen ein Gemisch aus 97,9 g Propen und 2,1 g Ethen vorgelegt wurde.

Die folgende Tabelle 1 stellt charakteristische Daten der in Beispielen 1 bis 3 (Polymere 1 bis 3) und Vergleichsbeispielen 4 bis 5 erhaltenen Polymere (Polymere V4 und V5) gegenüber.

**Tabelle 1:**

| Polymer | Ethenanteil^{a)} | Glastemperatur^{b)} | M_{w} ^{c)} | M_{w}/Mₙ ^{d)} | Ausbeute/g | Löslichkeit^{e)} |
|---|---|---|---|---|---|---|
| 1 | ca. 20 | 18,5 | 150000 | 2,2 | 10 | gut |
| 2 | ca. 30 | 13,6 | 180000 | 2,2 | 12 | gut |
| 3 | ca. 50 | 9,7 | 450000 | n.b.^{f)} | 16 | gut |
| V4 | 0 | 21,6 | 230000 | 1,8 | 8 | gut |
| V5 | ca. 50 | 6,8 | 120000 | 3,0 | 4 | gut |

| | | | | | | |
|---|---|---|---|---|---|---|
| a) Gew.-% Ethen bezogen auf den Gesamtolefingehalt des Polymers (bestimmt durch Elementaranalyse und ¹H-NMR, Meßungenauigkeit ca. +/- 5 Gew.-%) | | | | | | |
| b) °C (bestimmt mittels Differential Scanning Calorimetry (DSC)) | | | | | | |
| c) g/mol (bestimmt mittels Gelpermeations-Chromatographie) | | | | | | |
| d) bestimmt mittels Gelpermeations-Chromatographie | | | | | | |
| e) in CH₂Cl₂ | | | | | | |
| f) nicht bestimmt | | | | | | |

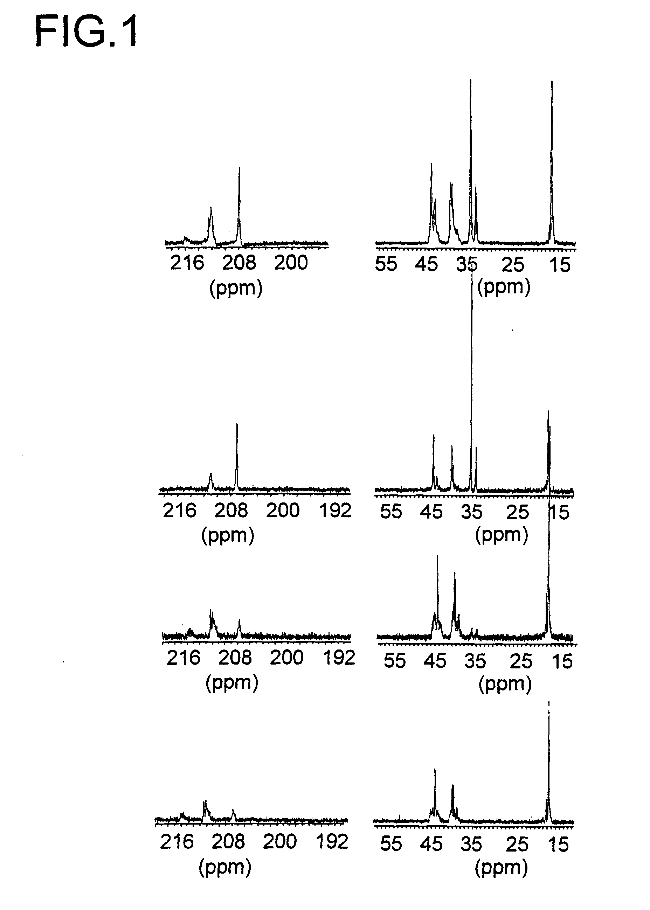

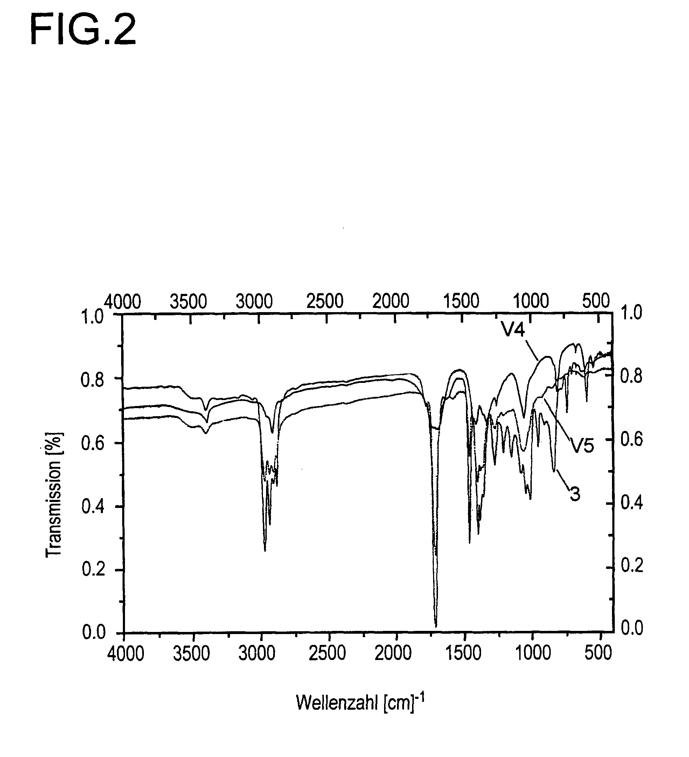

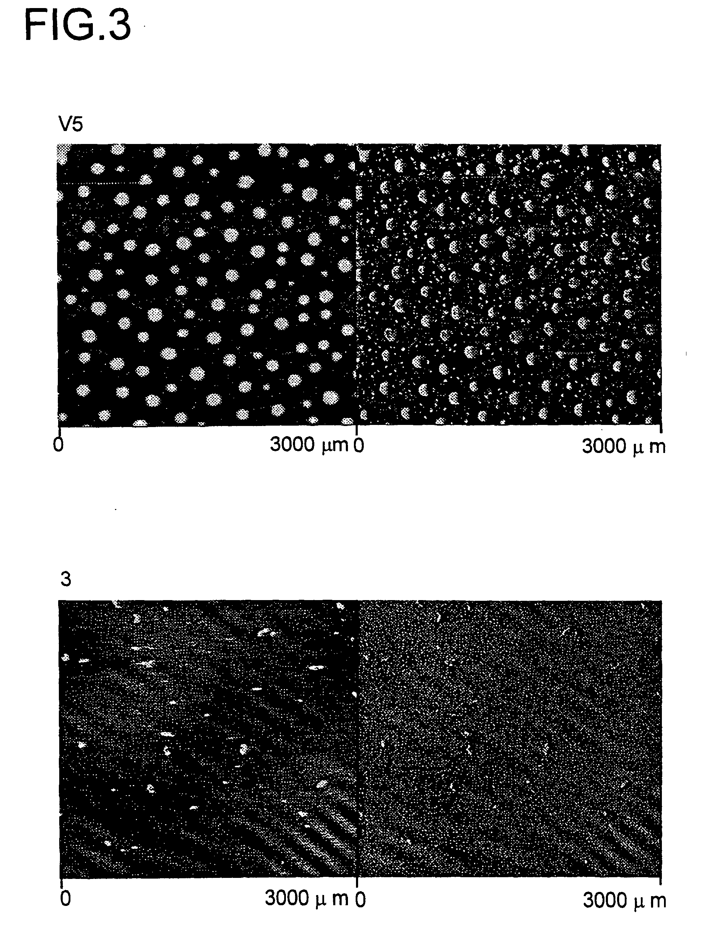

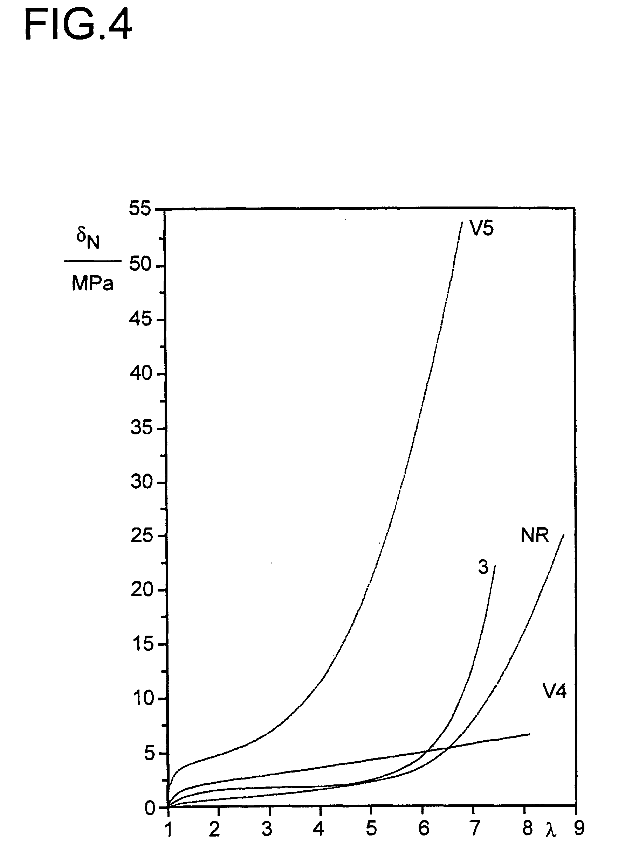

## Patentansprüche

1. Verfahren zur Herstellung von linearen, alternierenden Kohlenmonoxid-Copolymeren, bei dem mindestens eine olefinisch ungesättigte Verbindung mit zwei bis zwanzig Kohlenstoffatomen (Komponente K1) und Kohlenmonoxid in Gegenwart von
a) Metallkomplexen der allgemeinen Formel (I) 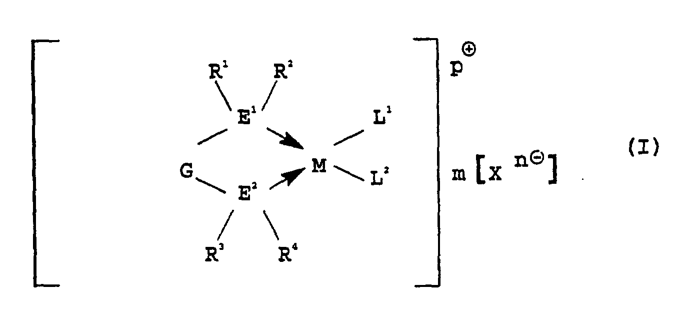 in der die Substituenten und Indizes die folgende Bedeutung haben:
G 5-, 6- oder 7-atomiges carbocyclisches Ringsystem ohne oder mit einem oder mehreren Heteroatomen, -(CR^{b} ₂)ᵣ-, -(CR^{b} ₂)ₛ-Si(R^{a})₂-(CR^{b} ₂)ₜ-, -A-O-B- oder -A-Z(R⁵)-B- mit
R⁵ Wasserstoff, C₁- bis C₂₈-Alkyl, C₃- bis C₁₄-Cycloalkyl, C₆- bis C₁₅-Aryl oder Alkylaryl mit 1 bis 20 C-Atomen im Alkylrest und 6 bis 15 C-Atomen im Arylrest, -N(R^{b})₂ oder -Si(R^{a})₃, wobei die genannten Reste auch substituiert sein können,
A, B -(CR^{b} ₂)_{r'}-, -(CR^{b} ₂)ₛ-Si(R^{a})₂-(CR^{b} ₂)ₜ-, -N(R^{b})-, ein r'-, s- oder t-atomiger Bestandteil eines Ringsystems oder zusammen mit Z ein (r'+1)-, (s+1)- oder (t+1)-atomiger Bestandteil eines Heterocyclus,
R^{a} unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil, wobei die genannten Reste auch substituiert sein können,
R^{b} wie R^{a}, zusätzlich Wasserstoff oder Si(R^{a})₃,
r 1, 2, 3 oder 4 und
r' 1 oder 2,
s, t 0, 1 oder 2, wobei 1 ≤ s+t ≤ 3,
Z ein nichtmetallisches Element aus der Gruppe 15 des Periodensystems der Elemente,
M ein Metall, ausgewählt aus den Gruppen 8 bis 12 des Periodensystems der Elemente,
E¹, E² ein nichtmetallisches Element aus der Gruppe 15 des Periodensystems der Elemente,
R¹ bis R⁴ lineares oder verzweigtes C₁- bis C₂₈-Alkyl, C₃-bis C₁₄-Cycloalkyl, C₆-C₁₅-Aryl oder Alkylaryl mit 1 bis 28 C-Atomen im Alkylteil und 6 bis 15 C-Atomen im Arylteil, wobei die genannten Reste auch substituiert sein können,
L¹, L² formal geladene oder neutrale Liganden,
X formal ein- oder mehrwertige Anionen,
p 0, 1, 2 oder 3,
m, n 0, 1, 2 oder 3,
wobei p = m x n,
b) gegebenenfalls einer Protonen- oder Lewissäure und
c) gegebenenfalls einer Hydroxyverbindung
copolymerisiert werden, **dadurch gekennzeichnet, daß** zu der laufenden Copolymerisation mindestens eine olefinisch ungesättigte Verbindung mit zwei bis zwanzig Kohlenstoffatomen (Komponente K2, ≠ Komponente K1) pulsweise, d.h. in Form einer regelmäßigen oder unregelmäßigen Abfolge von Zugabe, genannt Puls, und Nicht-Zugabe, zudosiert wird, wobei die Anzahl der Pulse zwei oder mehr beträgt.

2. Verfahren nach Anspruch 1, **dadurch gekennzeichnet, daß** mindestens eine olefinisch ungesättigte Verbindung der Komponente K2 weniger oder gleich viele Kohlenstoffatome enthält wie die olefinisch ungesättigte Verbindung mit der geringsten Kohlenstoffatomanzahl der Komponente K1.

3. Verfahren nach Anspruch 1, **dadurch gekennzeichnet, daß** mindestens eine olefinisch ungesättigte Verbindung der Komponente K2 eine mindestens gleich große oder höhere Reaktivität aufweist wie die olefinisch ungesättigte Verbindung mit der höchsten Reaktivität der Komponente K1.

4. Verfahren nach Ansprüchen 1 bis 3, **dadurch gekennzeichnet, daß** K1 Propen und K2 Ethen ist.

5. Verfahren nach Ansprüchen 1 bis 4, **dadurch gekennzeichnet, daß** die Pulsdauer 0,1 s bis 5 min beträgt.

6. Verfahren nach Ansprüchen 1 bis 5, **dadurch gekennzeichnet, daß** die Zeit zwischen zwei Pulsen 10 min bis 2 h beträgt.

7. Verfahren nach Ansprüchen 1 bis 6, **dadurch gekennzeichnet, daß** das Verhältnis der Zeit zwischen zwei Pulsen und der Pulsdauer im Bereich von 2 bis 100 000 liegt.

8. Verfahren nach Ansprüchen 1 bis 4, **dadurch gekennzeichnet, daß** die während eines Pulses zugeführte Menge der Komponente K2 im Vergleich zur insgesamt eingesetzten Menge der Komponente K1 0,01 bis 30 mol-% Olefin beträgt.

9. Kohlenmonoxid-Copolymere erhältlich nach einem Verfahren gemäß Ansprüchen 1 bis 8.

10. Verwendung der Kohlenmonoxid-Copolymeren gemäß Anspruch 9 für die Herstellung von Fasern, Folien oder Formkörpern.

11. Fasern, Folien oder Formkörper enthaltend Kohlenmonoxid-Copolymere gemäß Anspruch 9.

## Claims

1. A process for preparing linear, alternating carbon monoxide copolymers, in which at least one olefinically unsaturated compound having from two to twenty carbon atoms (component K1) and carbon monoxide are copolymerized in the presence of
a) metal complexes of the formula (I) 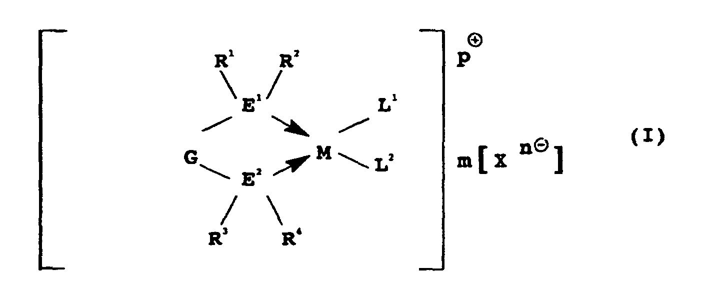 where:
G is a carbocyclic ring system having 5, 6 or 7 atoms, with or without one or more hetero atoms, -(CR^{b} ₂)ᵣ-, -(CR^{b} ₂)ₛ-Si(R^{a})₂-(CR^{b} ₂)ₜ-, -A-O-B- or -A-Z(R⁵)-B-, where
R⁵ is hydrogen, C₁-C₂₈-alkyl, C₃-C₁₄-cycloalkyl, C₆-C₁₅-aryl or alkylaryl having from 1 to 20 carbon atoms in the alkyl radical and from 6 to 15 carbon atoms in the aryl radical, -N(R^{b})₂ or -Si(R^{a})₃, where said radicals may also have substitution,
A, B are -(CR^{b} ₂)_{r'}-, -(CR^{b} ₂)ₛ-Si(R^{a})₂-(CR^{b} ₂)ₜ-, -N(R^{b})-, or a constituent having r', s or t atoms in a ring system, or, together with Z, are a constituent having (r'+1), (s+1) or (t+1) atoms in a heterocycle,
R^{a} , independently of one another, are C₁-C₂₀-alkyl, C₃-C₁₀-cycloalkyl, C₆-C₁₅-aryl or alkylaryl having from 1 to 10 carbon atoms in the alkyl moiety and from 6 to 15 carbon atoms in the aryl moiety, where said radicals may also have substitution,
R^{b} is as R^{a}, or hydrogen or Si(R^{a})₃,
r is 1, 2, 3 or 4,
r' is 1 or 2,
s, t are 0, 1 or 2, where 1 ≤ s+t ≤ 3,
Z is a nonmetallic element from group 15 of the Periodic Table,
M is a metal selected from the class consisting of groups 8 to 12 of the Periodic Table,
E¹, E² are nonmetallic elements from group 15 of the Periodic Table,
R¹ to R⁴ are linear or branched C₁-C₂₈-alkyl, C₃-C₁₄-cycloalkyl, C₆-C₁₅-aryl or alkylaryl having from 1 to 28 carbon atoms in the alkyl moiety and from 6 to 15 carbon atoms in the aryl moiety, where said radicals may also have substitution,
L¹, L² are formally charged or neutral ligands,
X are formally mono- or polyvalent anions,
p is 0, 1, 2 or 3,
m, n are 0, 1, 2 or 3,
where p = m x n,
b) if desired, a protonic or Lewis acid, and
c) if desired, a hydroxyl compound,
which comprises metering into the copolymerization, as it proceeds, at least one olefinically unsaturated compound having from two to twenty carbon atoms (component K2 ≠ component K1) in the form of pulses, i.e. as a regular or irregular sequence of feed, for which the term pulse is used, and non-feed, where the number of pulses is two or more.

2. A process as claimed in claim 1 , wherein the number of carbon atoms present in at least one olefinically unsaturated compound of component K2 is smaller than or equal to that in the olefinically unsaturated compound having the smallest number of carbon atoms in component K1.

3. A process as claimed in claim 1, wherein the reactivity of at least one olefinically unsaturated compound of component K2 is higher or at least the same as that of the highest-reactivity olefinically unsaturated compound in component K1.

4. A process as claimed in any of claims 1 to 3, wherein K1 is propene and K2 is ethene.

5. A process as claimed in any of claims 1 to 4, wherein the pulse duration is from 0.1 s to 5 min.

6. A process as claimed in any of claims 1 to 5, wherein the time between two pulses is from 10 min to 2 h.

7. A process as claimed in any of claims 1 to 6, wherein the ratio of the time between two pulses and the pulse duration is from 2 to 100 000.

8. A process as claimed in any of claims 1 to 4, wherein the amount of component K2 introduced during a pulse, compared with the entire amount of component K1 used, is from 0.01 to 30 mol% of olefin.

9. A carbon monoxide copolymer obtainable by a process as claimed in any of claims 1 to 8.

10. The use of the carbon monoxide copolymers as claimed in claim 9 for producing fibers, films or moldings.

11. A fiber, a film or a molding comprising carbon monoxide copolymers as claimed in claim 9.

## Revendications

1. Procédé de préparation de copolymères à monoxyde de carbone linéaires, alternés dans lequel on copolymérise au moins un composé oléfiniquement insaturé comportant deux à vingt atomes de carbone (composant K1) et du monoxyde de carbone, en présence
a) de complexes métalliques de la formule générale (I) : 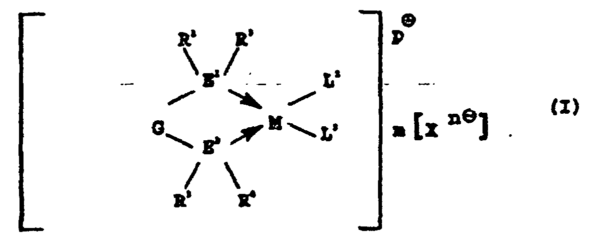 dans laquelle les substituants et indices ont la signification suivante :
G est un système cyclique carbocyclique à 5, 6 ou 7 atomes, sans ou avec un ou plusieurs hétéroatomes, -(CR^{b} ₂)ᵣ-,
-(CR^{b} ₂)ₛ-Si(R^{a})₂-(CR^{b} ₂)ₜ-, -A-O-B- ou -A-Z(R⁵)-B-, où
R⁵ représente de l'hydrogène ou un groupe alkyle en C₁-C₂₈, cycloalkyle en C₃-C₁₄, aryle en C₆-C₁₅ ou alkylaryle comportant 1 à 20 atomes de C dans le radical alkyle et 6 à 15 atomes de C dans le radical aryle, -N(R^{b})₂ ou -Si(R^{a})₃, les radicaux cités pouvant également être substitués,
A, B représentent un groupe -(CR^{b} ₂)_{r'}-,
- (CR^{b} ₂)ₛ-Si(R^{a})₂-(CR^{b} ₂)ₜ-, -N(R^{b})-, un composant à r', s ou t atomes d'un système cyclique ou, conjointement à Z, un composant à (r'+1), (s+1) ou (t+1) atomes d'un hétérocycle,
R^{a} représente indépendamment l'un de l'autre un groupe alkyle en C₁-C₂₀, cycloalkyle en C₃-C₁₀, aryle en C₆-C₁₅ ou alkylaryle comportant 1 à 10 atomes de C dans le radical alkyle et 6 à 15 atomes de C dans le radical aryle, les radicaux cités pouvant aussi être substitués,
R^{b} est comme R^{a}, ou en supplément de l'hydrogène ou Si(R^{a})₃,
r vaut 1, 2, 3 ou 4, et
r' vaut 1 ou 2,
s, t valent 0, 1 ou 2, où 1 ≤ s+t ≤ 3,
Z représente un élément non métallique du groupe 15 du système périodique des éléments,
M est un métal choisi parmi les groupes 8 à 12 du système périodique des éléments,
E¹, E² représentent un élément non métallique du groupe 15 du système périodique des éléments,
R¹ à R⁴ représentent un groupe alkyle en C₁-C₂₈ linéaire ou ramifié, cycloalkyle en C₃-C₁₄, aryle en C₆-C₁₅ ou alkylaryle comportant 1 à 28 atomes de C dans le radical alkyle et 6 à 15 atomes de C dans le radical aryle, les radicaux cités pouvant aussi être substitués,
L¹, L² sont des ligands de par la formule chargés ou neutres,
X sont des anions de par la formule monovalents ou plurivalents,
p vaut 0, 1, 2 ou 3,
m, n valent 0, 1, 2 ou 3,
où p = m x n,
b) éventuellement d'un acide protonique ou d'un acide de Lewis, et
c) éventuellement d'un composé hydroxy,
**caractérisé en ce que**, à la copolymérisation en cours, on ajoute en dosant au moins un composé oléfiniquement insaturé comportant 2 à 20 atomes de carbone (composant K2 ≠ composant K1) de manière pulsée, c'est-à-dire sous la forme d'une suite régulière ou irrégulière d'additions, appelée pulsations, et de non-additions, le nombre des pulsations étant de deux ou plus.

2. Procédé suivant la revendication 1, **caractérisé en ce qu'**au moins un composé oléfiniquement insaturé du composant K2 contient moins ou autant d'atomes de carbone que le composé oléfiniquement insaturé comportant le plus faible nombre d'atomes de carbone du composant K1.

3. Procédé suivant la revendication 1, **caractérisé en ce qu'**au moins un composé oléfiniquement insaturé du composant K2 présente une réactivité au moins égale ou supérieure à celle du composé oléfiniquement insaturé présentant la réactivité la plus élevée du composant K1.

4. Procédé suivant les revendications 1 à 3, **caractérisé en ce que** K1 est du propène et K2 de l'éthène.

5. Procédé suivant les revendications 1 à 4, **caractérisé en ce que** la durée de pulsation est de 0,1 seconde à 5 minutes.

6. Procédé suivant les revendications 1 à 5, **caractérisé en ce que** le temps entre deux pulsations est de 10 minutes à 2 heures.

7. Procédé suivant les revendications 1 à 6, **caractérisé en ce que** le rapport entre le temps entre deux pulsations et la durée de pulsation est de l'ordre de 2 à 100.000.

8. Procédé suivant les revendications 1 à 4, **caractérisé en ce que** la quantité du composant K2 alimentée pendant une pulsation comparativement à la quantité mise en oeuvre au total du composant K1 est de 0,01 à 30% molaires d'oléfine.

9. Copolymères à monoxyde de carbone que l'on peut obtenir suivant un procédé selon les revendications 1 à 8.

10. Utilisation des copolymères à monoxyde de carbone suivant la revendication 9, pour la préparation de fibres, de feuilles ou de corps façonnés.

11. Fibres, feuilles ou corps façonnés contenant des copolymères à monoxyde de carbone suivant la revendication 9.
